(19) Europäisches Patentamt
European Patent Office
Office européen des brevets

(11) Veröffentlichungsnummer: **0 042 554**
**B1**

(12) # EUROPÄISCHE PATENTSCHRIFT

(45) Veröffentlichungstag der Patentschrift: **14.03.84**

(51) Int. Cl.³: **C 08 G 73/06,** C 07 D 401/14, C 08 K 5/34

(21) Anmeldenummer: **81104522.8**

(22) Anmeldetag: **12.06.81**

(54) **Polytriazinylamine, Verfahren zu ihrer Herstellung, ihre Verwendung als Stabilisatoren für synthetische Polymere und mit diesen Verbindungen stabilisierte Polymere.**

(30) Priorität: **19.06.80 DE 3022896**

(43) Veröffentlichungstag der Anmeldung: **30.12.81 Patentblatt 81/52**

(45) Bekanntmachung des Hinweises auf die Patenterteilung: **14.03.84 Patentblatt 84/11**

(84) Benannte Vertragsstaaten: **AT BE CH DE FR GB IT LI NL SE**

(56) Entgegenhaltungen:
**DE - A - 2 636 130**
**DE - A - 2 636 144**
**DE - A - 2 719 131**
**DE - A - 2 752 740**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Wiezer, Hartmut, Dr., Hans-Fischer-Strasse 6, D-8906 Gersthofen (DE)**
Erfinder: **Pfahler, Gerhard, Dr., Karlsbader Strasse 27, D-8900 Augsburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Polytriazinylamine, Verfahren zu ihrer Herstellung, ihre Verwendung als Stabilisatoren für synthetische Polymere und mit diesen Verbindungen stabilisierte Polymere

Die Erfindung betrifft neue Polytriazinylpiperidylamine, ein Verfahren zu ihrer Herstellung und ihre Verwendung als Lichtschutzmittel mit zusätzlicher antioxidativer Wirkung.

Die neuen Verbindungen werden durch die allgemeine Formel (I)

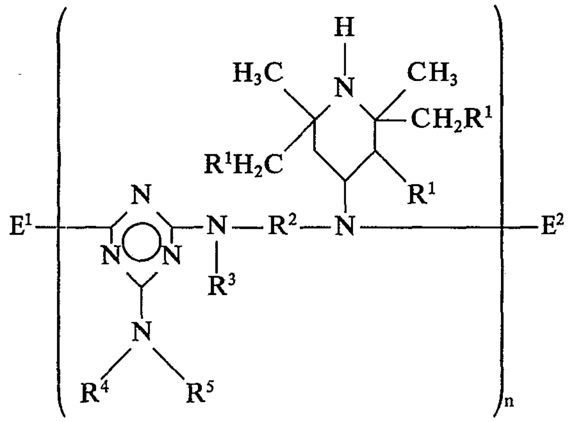

(I)

charakterisiert, in welcher

n eine ganze Zahl von 1 bis 200, vorzugsweise von 1 bis 50 und insbesondere von 1 bis 15, und bei n > 1 die Polymerkette »ataktisch« aufgebaut ist,

$R^1$ Wasserstoff oder $C_1$- bis $C_5$-Alkyl, vorzugsweise Wasserstoff oder Methyl und insbesondere Wasserstoff bedeutet, und

$R^2$ für $C_2$- bis $C_{18}$-, vorzugsweise $C_2$- bis $C_{12}$- und insbesondere $C_2$- bis $C_6$-Alkylen, oder für $C_2$- bis $C_{12}$-Bis-(propyloxi)-alkylen, oder für $C_6$- bis $C_{16}$-, vorzugsweise $C_6$- bis $C_{12}$-Mono-, Di- oder Tricycloalkylen, in welchem bei dem erstgenannten zwei C-Atome durch N-Atome, welche Propylengruppen tragen können, ersetzt sein können, oder für $C_6$- bis $C_{18}$-Arylen, vorzugsweise Phenylen, oder für $C_7$- bis $C_{18}$-Aralkylen steht, oder auch wenn n = 1 ist, $R^2$ für eine Gruppe der Formel (II)

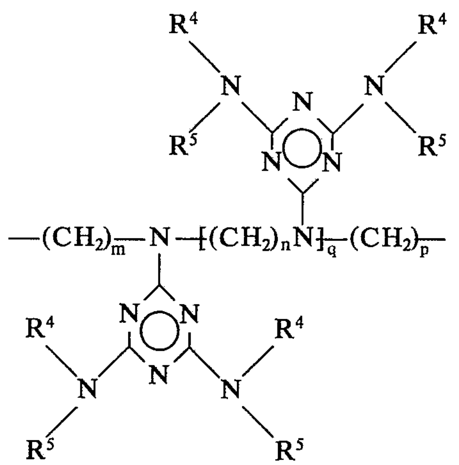

(II)

in welcher m, n und p ganze Zahlen von 2 bis 6, vorzugsweise 2 oder 3 sind, q eine ganze Zahl von 0 bis 3 ist, sowie $R^4$ und $R^5$ die weiter unten angegebenen Bedeutungen haben, stehen kann.

$R^3$ ist Wasserstoff oder $C_1$- bis $C_{18}$-Alkyl, oder $C_5$- bis $C_{12}$-Cycloalkyl oder $C_7$- bis $C_{14}$-Aralkyl, vorzugsweise Wasserstoff, $C_1$- bis $C_8$-Alkyl, $C_5$- bis $C_{12}$-Cycloalkyl oder $C_7$- bis $C_9$-Phenylalkyl, insbesondere jedoch Wasserstoff.

$R^4$ und $R^5$ sind gleich oder verschieden und stehen für Wasserstoff, für $C_1$- bis $C_{18}$-, vorzugsweise $C_1$- bis $C_8$-Alkyl, für $C_5$- bis $C_{12}$-Cycloalkyl, oder für $C_7$- bis $C_{14}$-Aralkyl, vorzugsweise für $C_7$- bis $C_9$-Phenylalkyl oder für Polyalkylpiperidyl der Formel (III)

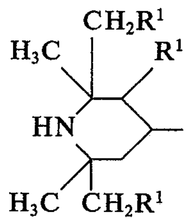

(III)

in welcher $R^1$ die oben angegebene Bedeutung hat. Sofern

$R^4$ eine der vorstehend genannten Gruppen ist, kann

$R^5$ auch die Bedeutung von $C_1$- bis $C_{18}$-, vorzugsweise $C_1$- oder $C_2$-Alkoxipropyl, oder $C_2$- bis $C_4$-Hydroxialkyl, oder $C_2$- bis $C_5$-Dimethyl- oder -Diethylaminoalkyl haben oder bei $n > 1$ für eine Gruppe der Formel $-R^2NHR^3$ im Falle von $R^4 = Pip$, oder für eine Gruppe der Formel $-R^2NHPip$ im Falle von $R^4 = R^3$ stehen, wobei $R^2$, $R^3$ und $R^4$ die oben angegebenen Bedeutungen haben und Pip eine Gruppe der Formel (III) ist.

$E^1$ ist ein Halogenatom, vorzugsweise Chlor, oder die Gruppe

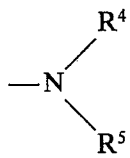

und

$E^2$ ist Wasserstoff oder ein Triazinring der Formel (IV)

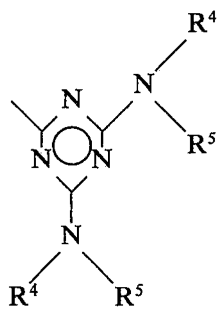

(IV)

in welchem $R^4$ und $R^5$ die oben genannten Bedeutungen haben.

Die neuen Triazinstabilisatoren werden ausgehend von un- oder teilsubstituierten Cyanurhalogeniden erhalten. Zur Durchführung der Synthese bieten sich daher grundsätzlich mehrere Verfahrensvarianten an, die im nachfolgenden, vereinfachten Reaktionsschema skizziert sind.

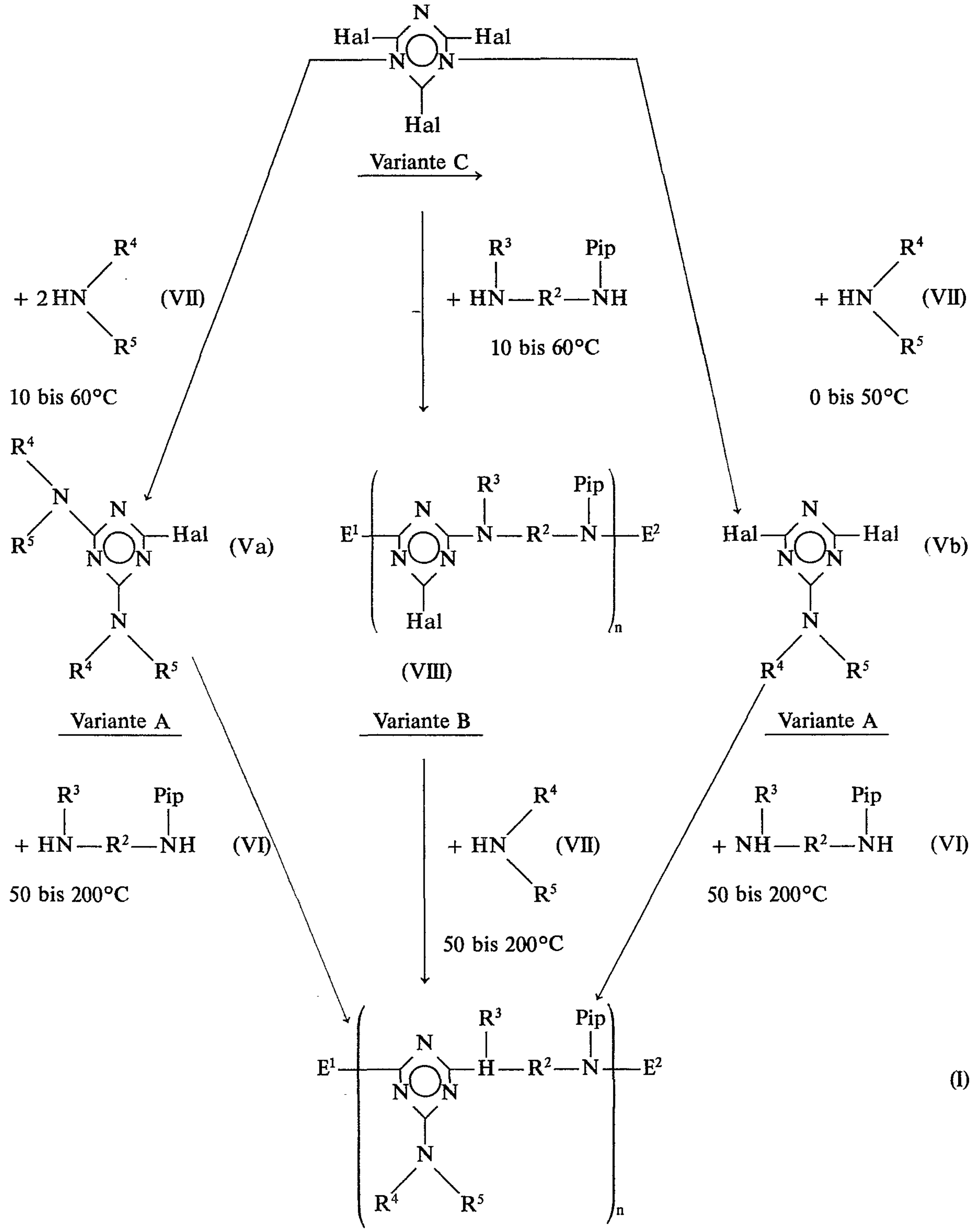


In den Formeln des Reaktionsschemas haben n, $R^2$, $R^3$, $R^4$, $R^5$, $E^1$ und $E^2$ die oben angegebenen Bedeutungen; Pip steht für einen Rest der Formel (III), Hal für Halogen.

Nach Variante A wird zur Herstellung von solchen Polytriazinylaminen der Formel (I), in denen n = 1 ist, $E^1$ die Bedeutung eines Restes

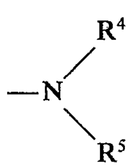

und $E^2$ die Bedeutung eines Restes der Formel (IV) hat, ein Monohalogentriazin der Formel (V a), und zur Herstellung von Polytriazinen der Formel (I) mit n > 1 ein Dihalogentriazin der Formel (V b) mit der 0,8- bis 1,4-, vorzugsweise der 1,0- bis 1,2- und insbesondere der 1- bis 1,05fach molaren Menge eines Polyamins der Formel (VI) umgesetzt.

Variante B beinhaltet die Reaktion eines Polytriazins der Formel (VIII) mit der 0,8- bis 1,4-, vorzugsweise der 1,0- bis 1,2- und insbesondere der 1,0- bis 1,05fach äquivalenten Menge eines Amins der Formel (VII) und ist besonders für die Herstellung von Polytriazinen der Formel (I) geeignet, in denen $R^2$ nicht die Bedeutung eines Restes der Formel (II) hat.

Variante C ist ein sogenanntes Mehrstufen-Eintopfverfahren, bei dem zunächst ein Cyanurhalogenid, vorzugsweise Cyanurchlorid, zur Synthese der Zwischenverbindungen (V a) mit der 1,9- bis 2,1-, vorzugsweise der 1,95- bis 2,05- und insbesondere der zweifach molaren Menge, zur Synthese der Zwischenverbindungen (V b) mit der 0,8- bis 1,3-, vorzugsweise der 0,9- bis 1,1- und insbesondere der äquimolaren Menge eines Amins der Formel (VII) und zur Herstellung der Zwischenverbindung VIII mit der 0,8- bis 1,4fach, vorzugsweise der 1,0 bis 1,2- und insbesondere der 1 bis 1,05fach molaren Menge eines Diamins der Formel (VI) umgesetzt wird. Die so erhaltenen Zwischenverbindungen Va, Vb und VIII setzt man sodann ohne Isolierung unter den für die Varianten A bzw. B angegebenen Bedingungen zu dem gewünschten Triazin (I) um.

Die Reaktionen werden in inerten organischen Lösungsmitteln wie z. B. Petrolether, Benzinen, Aceton, Ether, Dioxan, Benzol, Toluol, Xylol, Cumol, Mesitylen oder Gemischen derselben vorgenommen.

Die Varianten A und B erfordern Reaktionstemperaturen von 50 bis 200, vorzugsweise 80 bis 180 und insbesondere 100 bis 160°C. Nach dem Verfahren gemäß Variante C wird die Monosubstitution des Cyanurhalogenids zu Verbindung (V b) bei 0 bis 50, vorzugsweise 0 bis 25 und insbesondere 0 bis 10°C, die Disubstitution des Cyanurhalogenids zu V a oder VIII bei 10 bis 60, vorzugsweise bei 20 bis 50 und insbesondere bei 40 bis 50°C durchgeführt.

Bei der Herstellung der neuen Verbindungen gibt man als Halogenwasserstoffakzeptoren anorganische Basen zu. Geeignet sind z. B. Natriumhydroxid, Kaliumhydroxid, Natriumcarbonat und Kaliumcarbonat in fester Form oder in wäßriger Lösung. Zur Beschleunigung der Reaktion erweist es sich als vorteilhaft, Phasentransferkatalysatoren, das sind z. B. Verbindungen aus der Gruppe der quaternären Ammoniumsalze, in Mengen von 0,01 bis 1 Gew.-%, bezogen auf Endprodukt, zuzusetzen.

Beispiele für Monohalogentriazinzwischenprodukte der Formel (V a) sind:

2-Chlor-4,6-bis-[N-(2,2,6,6-tetramethyl-4-piperidyl)-3-methoxipropylamino]-1,3,5-triazin
2-Chlor-4,6-bis-[N-(2,2,6,6-tetramethyl-4-piperidyl)-3-ethoxipropylamino]-1,3,5-triazin
2-Chlor-4,6-bis-[N-(2,2,6,6-tetramethyl-4-piperidyl)-3-octadecyloxipropylamino]-1,3,5-triazin
2-Chlor-4,6-bis-[N-(2,2,6,6-tetramethyl-4-piperidyl)-3-dimethylaminopropylamino]-1,3,5-triazin
2-Chlor-4,6-bis-[N-(2,2,6,6-tetramethyl-4-piperidyl)-2-diethylaminoethylamino]-1,3,5-triazin
2-Chlor-4,6-bis-[N-(2,2,6,6-tetramethyl-4-piperidyl)-4-diethylaminobutylamino]-1,3,5-triazin
2-Chlor-4,6-bis-[N-(2,2,6,6-tetramethyl-4-piperidyl)-butylamino]-1,3,5-triazin
2-Chlor-4,6-bis-[N-(2,2,6,6-tetramethyl-4-piperidyl)-octadecylamino]-1,3,5-triazin
2-Chlor-4,6-bis-[N-(2,2,6,6-tetramethyl-4-piperidyl)-amino]-1,3,5-triazin
2-Chlor-4,6-bis-[N-(2,2,6,6-tetramethyl-4-piperidyl)-3-cyclohexylamino]-1,3,5-triazin
2-Chlor-4,6-bis-[N-(2,2,6,6-tetramethyl-4-piperidyl)-3-cyclododecylamino]-1,3,5-triazin

Beispiele für Dichlortriazinzwischenprodukte der Formel (V b) sind:

2,4-Dichlor-6-[N-(2,2,6,6-tetramethyl-4-piperidyl)-3-hydroxipropylamino]-1,3,5-triazin
2,4-Dichlor-6-[N-(2,2,6,6-tetramethyl-4-piperidyl)-2-methoxipropylamino]-1,3,5-triazin
2,4-Dichlor-6-[N-(2,2,6,6-tetramethyl-4-piperidyl)-3-ethoxipropylamino]-1,3,5-triazin
2,4-Dichlor-6-[N-(2,2,6,6-tetramethyl-4-piperidyl)-3-octoxipropylamino]-1,3,5-triazin
2,4-Dichlor-6-[N-(2,2,6,6-tetramethyl-4-piperidyl)-3-tridecyloxipropylamino]-1,3,5-triazin
2,4-Dichlor-6-[N-(2,2,6,6-tetramethyl-4-piperidyl)-3-octadecyloxipropylamino]-1,3,5-triazin
2,4-Dichlor-6-[N-(2,2,6,6-tetramethyl-4-piperidyl)-3-dimethylaminopropylamino]-1,3,5-triazin
2,4-Dichlor-6-[N-(2,2,6,6-tetramethyl-4-piperidyl)-3-diethylaminopropylamino]-1,3,5-triazin
2,4-Dichlor-6-[N-(2,2,6,6-tetramethyl-4-piperidyl)-2-dimethylaminoethylamino]-1,3,5-triazin
2,4-Dichlor-6-[N-(2,2,6,6-tetramethyl-4-piperidyl)-2-diethylaminoethylamino]-1,3,5-triazin
2,4-Dichlor-6-[N-(2,2,6,6-tetramethyl-4-piperidyl)-4-diethylaminobutylamino]-1,3,5-triazin
2,4-Dichlor-6-[N-(2,2,6,6-tetramethyl-4-piperidyl)-4-diethylamino-1-methylbutylamino]-1,3,5-triazin
2,4-Dichlor-6-[N-(2,3,6-trimethyl-2,6-diethyl-4-piperidyl)-3-methoxipropylamino]-1,3,5-triazin
2,4-Dichlor-6-dioctadecylamino-1,3,5-triazin
2,4-Dichlor-6-butylamino-1,3,5-triazin
2,4-Dichlor-6-octadecylamino-1,3,5-triazin
2,4-Dichlor-6-dicyclohexylamino-1,3,5-triazin

2,4-Dichlor-6-[N-(2,2,6,6-tetramethyl-4-piperidyl)-butylamino]-1,3,5-triazin

Beispiele für Verbindungen der Formel (VI) sind:

1-Cyclododecyl-1,5,9-triazanonan,
1,9-Bis-cyclodedecyl-1,5,9-triazanonan,
1-[N-(2,2,6,6-tetramethyl-4-piperidyl)]-1,5,9-triazanonan,
1-[N-(2,2,6,6-tetramethyl-4-piperidyl]-1,5,8,12-tetra-azadodecan,
N-(2,2,6,6-Tetramethyl-4-piperidyl)-ethylendiamin,
N-(2,2,6,6-Tetramethyl-4-piperidyl)-hexamethylendiamin,
N-(2,2,6,6-Tetramethyl-4-piperidyl)-N'-isopropyl-hexamethylendiamin,
N-(2,2,6,6-Tetramethyl-4-piperidyl)-N'-cyclododecyl-hexamethylendiamin,
N,N'-Bis-(cyclododecyl)-hexamethylendiamin,
N-(2,2,6,6-Tetramethyl-4-piperidyl)-1,3-bis-aminomethylcyclohexan,
N-(2,2,6,6-Tetramethyl-4-piperidyl)-bis-(3-aminopropyl)-piperazin,
N-(2,2,6,6-Tetramethyl-4-piperidyl)-dicyclohexylmethandiamin-4,4',
N-(2,2,6,6-Tetramethyl-4-piperidyl)-4,7-dioxadecan-1,10-diamin und
N-(2,2,6,6-Tetramethyl-4-piperidyl)-bis-3,8-aminomethyl-tricyclo-[4,3,0,$1^{2,5}$]-decan

Beispiele für Verbindungen der Formel (VII) sind:

N-(2,2,6,6-Tetramethyl-4-piperidyl)-3-methoxipropylamin
N-(2,2,6,6-Tetramethyl-4-piperidyl)-3-ethoxipropylamin
N-(2,2,6,6-Tetramethyl-4-piperidyl)-3-octoxipropylamin
N-(2,2,6,6-Tetramethyl-4-piperidyl)-3-tridecyloxipropylamin
N-(2,2,6,6-Tetramethyl-4-piperidyl)-3-octadecyloxipropylamin
N-(2,2,6,6-Tetramethyl-4-piperidyl)-3-dimethylaminopropylamin
N-(2,2,6,6-Tetramethyl-4-piperidyl)-3-diethylamino-propylamin
N-(2,2,6,6-Tetramethyl-4-piperidyl)-2-dimethylaminoethylamin
N-(2,2,6,6-Tetramethyl-4-piperidyl)-2-diethylaminoethylamin
N-(2,2,6,6-Tetramethyl-4-piperidyl)-4-diethylaminobutylamin
2,2,6,6-Tetramethyl-4-piperidylaminopropanol-3
N-(2,2,6,6-Tetramethyl-4-piperidyl)-4-diethylamino-1-methylbutylamin
2,2,6,6-Tetramethyl-4-amino-piperidin
N-(2,2,6,6-Tetramethyl-4-piperidyl)-butylamin
N-(2,2,6,6-Tetramethyl-4-piperidyl)-octadecylamin
N-(2,2,6,6-Tetramethyl-4-piperidyl)-cyclododecylamin

Die Umsetzung von Cyanursäurehalogeniden mit primären oder sekundären Mono- oder Polyaminen zu definierten Verbindungen oder polymeren Triazinen ist seit geraumer Zeit Stand der Technik [J. Am. Chem. Soc. 73 (1951), Nr. 7, S. 2981 ff; US-PS 2 544 071; CH-PSS 342 784 und 342 785].

Bekannt sind ferner Polytriazinverbindungen der Formel

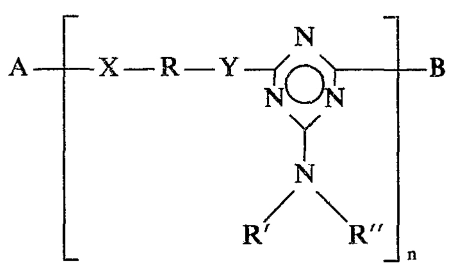

mit »isotaktisch« eingebauten, die Triazinringe verknüpfenden Diaminobausteinen, worin X und Y gleich oder verschieden sein können und —O—, —S— oder

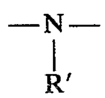

bedeuten (DE-OS 2 636 144).

Demgegenüber sind die erfindungsgemäßen Produkte »ataktisch« aufgebaute Polytriazine, weil die Polymerisation mit Diaminen der Formel

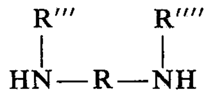

d. h. auf die vorstehende Formel bezogen mit

X = 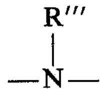 und Y = 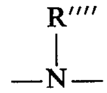

aufgrund der sich praktisch nicht unterscheidenden Reaktivität der beiden Aminogruppen nach dem Gesetz der Statistik erfolgt. Selbst in Diaminen der Formel

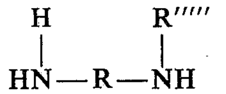

sind die Reaktivitäten der Aminogruppen als gleichwertig zu bezeichnen, so daß auch in diesem Falle mit der Bildung von »ataktischen« Triazinpolymeren zu rechnen ist.

Daß von den erfindungsgemäßen Verbindungen auch die, in denen $R^5$ die Bedeutung einer Hydroxialkyl-, Alkoxipropyl- oder Dialkylaminopropylgruppe hat, herstellbar sind, war keineswegs vorhersehbar, denn diese Gruppen können analog der —NH-Gruppe ebenfalls mit Säurechloriden reagieren, und es war daher damit zu rechnen, daß es zu Brückenbildungen zwischen zwei verschiedenen Triazinringen kommen würde, was zu unerwünschten vernetzten Produkten geführt hätte. Veröffentlichungen über die bekannte Bildung von Cyanursäureestern aus Alkoholen, welche auch durch Etherspaltung aufgrund nicht auszuschließender Mengen Halogenwasserstoff aus Alkoxialkylgruppen entstehen können, sowie über die Synthese von Cyanursäuredialkylaminen aus Cyanurhalogenid und tert. Aminen, wie z. B. Triethylamin, Alkylpiperidin und Alkylmorpholin, ließen einen derartigen Reaktionsverlauf als durchaus möglich, wenn nicht sogar bevorzugt erscheinen [Ullmann Bd. 9 (1975), S. 651; E. Kober und R. Rätz, J. Org. Chem. 27 (1962), S. 2509 ff].

Die neuen Verbindungen sind den ihnen am nächsten kommenden, in der DE-OS 2 636 144 beschriebenen, und auch solchen der DE-OS 2 636 130 in ihren stabilisierenden Eigenschaften merklich überlegen, womit nicht zu rechnen war, nachdem aus der erstgenannten Offenlegungsschrift entnommen werden kann, daß die Anzahl der Piperidylgruppen augenscheinlich für die Wirksamkeit von Bedeutung ist. Es wird nämlich aufgezeigt, daß die Verbindungen, in denen entsprechend der vorstehend angegebenen Formel die Symbole X und Y für >N—Pip (Pip = 2,2,6,6-Tetramethylpiperidyl) stehen (Beispiele 1, 3, 4, 6, 8) und in denen kein Schwefel (Beispiel 5) enthalten ist, wirksamer sind als die Verbindungen, in denen X die Bedeutung von >N—H oder —O— hat (Beispiele 2 und 7). Die Überlegenheit der erfindungsgemäßen Stabilisatoren, die in dem triazinringverknüpfenden Diaminobaustein nur eine Piperidingruppe tragen, muß daher als außerordentlich überraschend bezeichnet werden. Überraschend ist auch die sehr geringe Flüchtigkeit der neuen Stabilisatoren, die niedriger liegt als bei den besten der in den genannten Offenlegungsschriften beschriebenen Produkte, einem bei der Stabilisierung von dünnen Materialien, wie z. B. Fäden, Fasern und Folien, wichtigen anwendungstechnischen Kriterium. Diese nicht vorhersehbare Eigenschaft ist besonders bei den Produkten, in denen $R^3$ Wasserstoff ist, ausgeprägt.

Die neuen Triazinstabilisatoren lassen sich problemlos in die zu stabilisierenden Polymeren einarbeiten und schützen diese hervorragend gegen den lichtinduzierten, oxidativen Abbau. Neben der ausgezeichneten Stabilisatorwirksamkeit zeichnen sie sich durch ihre Verträglichkeit mit den zu stabilisierenden Polymeren, ihre Migrationsfestigkeit gegen das Auswaschen mit Wasser, welche bei der Freibewitterung eine bedeutende Rolle spielt, ihre Thermostabilität auch bei hohen Verarbeitungstemperaturen und ihre geringe Flüchtigkeit, insbesondere im Vergleich zum Produkt des Beispiels 6 der DE-OS 2 636 144, aus.

Die ausgeprägte Wirksamkeit überrascht auch deshalb, weil man, wie schon erwähnt, aufgrund der Beispiele 2 und 7 der DE-OS 2 636 144 annehmen mußte, daß Produkte, die nicht zwei Piperidylgruppen der Formel (III) im bifunktionellen, polymerkettenbildenden Amin aufweisen, deutlich in ihrer Eignung als Lichtschutzmittel abfallen würden.

Die neuen Verbindungen sind als Stabilisatoren für synthetische Polymere gegen deren Schädigung durch Einwirkung von Sauerstoff, Wärme und Licht geeignet, wobei unter synthetischen Polymeren verstanden werden sollen:

Polymere, die sich von einfach oder doppelt ungesättigten Kohlenwasserstoffen ableiten, z. B. Polyolefine wie Polyethylen, das gegebenenfalls vernetzt sein kann, Polypropylen, Polybuten-1, Polyisobuten, Polymethylbuten-1, Polymethylpenten-1, Polyisopren, Polybutadien, Polystyrol, Copolymere der den genannten Homopolymeren zugrundeliegenden Monomeren, wie Ethylen-Propylen-Copolymere,

Propylen-Buten-1-Copolymere, Propylen-Isobuten-Copolymere, Styrol-Butadien-Copolymere sowie Terpolymere von Ethylen und Propylen mit einem Dien, wie z. B. Hexadien, Dicyclopentadien oder Ethylidennorbornen; Mischungen der oben genannten Homopolymeren, wie beispielsweise Gemische von Polypropylen und Polyethylen, Polypropylen und Polybuten-1, Polypropylen und Polyisobutylen oder von Butadien-Acrylnitril-Copolymerisaten mit Styrol-Butadien-Copolymerisaten.

Halogenhaltige Vinylpolymere, wie Polyvinylchlorid, Polyvinylidenchlorid, Polyvinylfluorid, Polychloropren und Chlorkautschuke sowie Copolymere von Vinylchlorid und Vinylidenchlorid untereinander und mit anderen olefinisch ungesättigten Monomeren.

Polymere, die sich von $\alpha,\beta$-ungesättigten Säuren und deren Derivaten ableiten, wie Polyacrylate und Polymethacrylate, Polyacrylamide und Polyacrylnitril sowie deren Copolymere untereinander und mit anderen Vinylverbindungen, wie Acrylnitril-Butadien-Styrol-, Acrylnitril-Styrol- und Acrylnitril-Styrol-Acrylester-Copolymerisate.

Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin und deren Copolymere mit anderen Vinylverbindungen, wie Ethylen-Vinylacetat-Copolymere.

Homo- und Copolymere, die sich von Epoxiden ableiten, wie Polyethylenoxid oder die Polymerisate, die sich von Bisglycidylethern ableiten.

Polyacetale, wie Polyoximethylen und Polyoxiethylen sowie solche Polyoximethylene, die als Comonomeres Ethylenoxid enthalten.

Polyurethane und Polyharnstoffe.

Polycarbonate.

Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.

Polyester, die sich von Dicarbonsäuren und Dialkoholen und/oder von Hydroxicarbonsäuren oder den entsprechenden Lactonen ableiten, wie Polyethylenterephthalat, Polybutylenterephthalat, Poly-1,4-dimethylol-Cyclohexanterephthalat.

Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

Die neuen Verbindungen lassen sich schließlich auch als Stabilisatoren auf dem Harz- und Lacksektor einsetzen. Beispiele sind duroplastische und thermoplastische Acrylharze, welche für Autolackierungen verwendet werden [Encyclopedia of Polymer Science and Technology, Interscience Publishers, New York, Band 1, (1964), Seiten 273—276 und Band 13 (1970), Seiten 530—532; »Understanding Paint« von W. R. Fuller, in American Paint Journal Co., St. Louis, 1965, Seite 124—135], Acrylharzlacke, das sind die üblichen Einbrennlacke [beschrieben z. B. in H. Kittel's »Lehrbuch der Lacke und Beschichtungen«, Band 1, Teil 2, Seite 735 und 742 (Berlin, 1972), und in H. Wagner, H. F. Sarx »Lackkunstharze«, Seite 229—235] sowie ganz besonders Mischungen auf der Basis von heiß-vernetzbarem Acrylharz und Styrol sowie Lacke und Beschichtungen auf der Basis von Acryl/Melaminharz und Alkyd/Acryl/Melaminharz. Derartige Lacke können als weitere Zusatzstoffe andere übliche Lichtschutzmittel, phenolische Antioxidantien, Pigmente, Farbstoffe, Metalldesaktivatoren etc. enthalten.

Von besonderer Bedeutung ist die Stabilisierung von Polyolefinen, Styrolpolymerisaten, Polyamiden, Poly(meth-)acrylaten und von Polyurethanen, für die sich die Verbindungen bevorzugt eignen. Beispiele hierfür sind Polyethylen hoher und niedriger Dichte, Polypropylen, Ethylen-Propylen-Copolymerisate, Polystyrol, Styrol-Butadien-Acrylnitril-Terpolymerisate, Mischungen von Polyolefinen oder von Styrolpolymerisaten sowie Polyurethane auf Polyether- oder Polyesterbasis.

Die neuen Stabilisatoren werden nach allgemein üblichen Methoden in die Polymermassen eingearbeitet. Die Einarbeitung kann beispielsweise durch Einmischen der Verbindungen und gegebenenfalls weiterer Additive in die Schmelze nach den in der Technik üblichen Methoden, vor oder während der Formgebung, oder auch durch Aufbringen der gelösten oder dispergierten Verbindungen auf das Polymere direkt oder Einmischen in eine Lösung, Suspension oder Emulsion desselben, gegebenenfalls unter nachträglichem Verdunstenlassen des Lösungsmittels, erfolgen. Die Mengen liegen bei 0,01 bis 5, vorzugsweise bei 0,05 bis 2,5 und insbesondere bei 0,01 bis 1,0 Gew.-%, bezogen auf das zu stabilisierende Material. Die neuen Verbindungen können auch in Form eines Masterbatches, der diese Verbindungen beispielsweise in einer Konzentration von 1 bis 50, vorzugsweise 2,5 bis 20 Gew.-% enthält, den zu stabilisierenden Kunststoffen zugesetzt werden.

Die durch den Zusatz der erfindungsgemäßen Substanzen stabilisierten Kunststoffe können gegebenenfalls noch andere bekannte und übliche Zusätze, wie beispielsweise Antioxidantien auf Phenol- und Sulfidbasis, Metalldesektivatoren, Lichtschutzmittel, Phosphitstabilisatoren, Metallverbindungen, Epoxistabilisatoren, mehrwertige Alkohole, verstärkende Füllstoffe wie Kreide, Talkum, Asbest und organische und/oder anorganische Pigmente und Farbstoffe enthalten.

Beispiele für Antioxidantien sind solche vom Typ der sterisch gehinderten Phenole wie 4,4'-Butyliden-bis-(2,6-di-tert.-butylphenol), Ester der $\beta$-(3,5-Di-tert.-butyl-4-hydroxiphenyl)-propionsäure mit ein- oder mehrwertigen Alkoholen oder Thioalkoholen, Ethylenglykol-bis-[3,3-bis-(3'-tert.-butyl-4'-hydroxiphenyl)-butyrat], 1,1,3-Tris-(5-tert.-butyl-4-hydroxi-2-methylphenyl)-butan, 1,3,5-Tris-(3,5-di-tert.-butyl-4-hydroxibenzyl)-2,4,6-trimethylbenzol, Ca oder Ni-Salze des 3,5-Di-tert.-butyl-4-hydroxibenzylphosphonsäuremonoethylesters, phenolische Triazinverbindungen, Thiodipropionsäureester von Fettalkoholen, Dioctadecylsulfid und -disulfid.

Zu den UV-Absorbern und Lichtschutzmitteln gehören z. B. 2-(2'-Hydroxiphenyl)-benztriazole wie 2-(2'-Hydroxi-5'-methylphenyl)-benztriazol, 2-Hydroxibenzophenone wie 2-Hydroxi-4-octoxi-benzophenon, Stabilisatoren aus der Gruppe der Salizylate wie Octylphenylsalizylat, Nickelchelate, Oxalsäurediamide und sterisch gehinderte Piperidinverbindungen.

Als Phosphite sind Trisnonylphenylphosphit, Trislaurylphosphit oder auch Ester des Pentaerythritphosphits zu nennen.

Unter als Stabilisatoren bekannten Metallverbindungen werden in diesem Zusammenhang verstanden: Calcium-, Barium-, Strontium-, Zink-, Cadmium-, Magnesium-, Aluminium- und Bleiseifen aliphatischer Carbonsäuren oder Oxicarbonsäuren mit etwa 12 bis 32 C-Atomen, Salze der genannten Metalle mit aromatischen Carbonsäuren wie Benzoate oder Salizylate sowie (Alkyl-)Phenolate dieser Metalle, ferner Organozinnverbindungen, wie z. B. Dialkylzinnthioglykolate und -carboxilate.

Bekannte Epoxistabilisatoren sind z. B. epoxidierte höhere Fettsäuren wie epoxidiertes Sojabohnenöl, Tallöl, Leinöl oder epoxidiertes Butyloleat sowie Epoxide langkettiger Olefine.

Mehrwertige Alkohole können beispielsweise Pentaerythrit, Trimethylolpropan, Sorbit oder Mannit sein, d. h. bevorzugt Alkohole mit 5 oder 6 C-Atomen und 2 bis 6 OH-Gruppen.

Eine wirksame Stabilisatorkombination für Poly-$\alpha$-Olefine, wie z. B. Hoch-, Mittel- und Niederdruckpolymerisate von $C_2$- bis $C_4$-$\alpha$-Olefinen, insbesondere Polyethylen und Polypropylen oder von Copolymerisaten derartiger $\alpha$-Olefine besteht, bezogen auf 100 Gewichtsteile Polymer, beispielsweise aus 0,01 bis 5 Gewichtsteilen einer der erfindungsgemäß zu verwendenden Verbindungen, 0,05 bis 5 Gew.-Teilen eines phenolischen Stabilisators, gegebenenfalls 0,01 bis 5 Gew.-Teilen eines schwefelhaltigen Costabilisators sowie ggf. 0,01 bis 3 Gew.-Teilen einer basischen oder neutralen Metallseife, wie z. B. Calciumstearat oder Zinkstearat oder der entsprechenden Oxide sowie gegebenenfalls 0,1 bis 5 Gewichtsteilen eines Phosphits und gegebenenfalls 0,01 bis 5 Gewichtsteilen eines bekannten UV-Stabilisators aus der Gruppe der Alkoxihydroxibenzophenone, 4-Hydroxiphenylbenzotriazole, Benzylidenmalonsäuremononitrilester oder der sog. Quencher, wie z. B. Nickelchelate.

Die erfindungsgemäß stabilisierten Kunststoffe können in verschiedenster Form angewendet werden, z. B. als Folien, Fasern, Bändchen, Profile oder als Bindemittel für Lacke, Klebemittel oder Kitte.

Die folgenden Beispiele dienen der weiteren Erläuterung der Erfindung:

## Beispiel 1

In eine Lösung aus 9,2 g (0,05 Mol) Cyanurchlorid in 60 ml Xylol tropft man 11,4 g (0,05 Mol) N-(2,2,6,6-Tetramethyl-4-piperidyl)-3-methoxipropylamin (= monofunktionelles Edukt), gelöst in 90 ml Xylol bei 0 bis 5°C ein. Nach Zugabe von 2 g NaOH-Pulver wird 4 Stunden bei derselben Temperatur nachgerührt. Anschließend gibt man 10,0 g (0,05 Mol) N-(2,2,6,6-Tetramethyl-4-piperidyl)-ethylendiamin (= bifunktionelles Edukt) zu, erwärmt auf 40°C und hält 30 Minuten bei dieser Temperatur. Nach Zugabe von 4 g (0,1 Mol) NaOH-Pulver wird 20 Stunden unter Rückfluß gekocht, worauf man das Reaktionswasser am Wasserabscheider abtreibt. Die Reaktionslösung wird heiß filtriert und dem Filtrat sodann am Rotationsverdampfer im Vakuum das Lösungsmittel entzogen. Das zurückbleibende Harz wird bei 150°C im Hochvakuum getrocknet, wonach 27,5 g verbleiben, die mit 200 ml heißem Wasser verrührt werden. Der Feststoff wird abgenutscht und getrocknet. Ausbeute 24,8 g = 98,8% d. Th. eines spröden, farblosen Harzes, Schmelzpunkt 237–259°C.

## Beispiele 2 bis 30

Es wurde analog Beispiel 1, jedoch unter Verwendung anderer Amine gearbeitet, wobei ebenfalls feste, harzartige, farblose bis schwach gelblich gefärbte Harze anfielen.

| Beispiel | Monofunktionelles Edukt (Menge) | Bifunktionelles Edukt (Menge) |
|---|---|---|
| 2 | N-(2,2,6,6-Tetramethyl-4-piperidyl)- 3-ethoxipropylamin (12,1 g = 0,05 Mol) | analog Beispiel 1 |
| 3 | N-(2,2,6,6-Tetramethyl-4-piperidyl)-3-dimethylaminopropylenamin (12,1 g = 0,05 Mol) | dto. |
| 4 | N-(2,2,6,6-Tetramethyl-4-piperidyl)-4-diethylaminobutylamin (14,2 g = 0,05 Mol) | dto. |
| 5 | N-(2,2,6,6-Tetramethyl-4-piperidyl)-3-octadecyloxipropylamin (23,2 g = 0,05 Mol) | dto. |
| 6 | kein monofunktionelles Edukt | dto. (statt 10 g jedoch 19,9 g = 0,1 Mol) |
| 7 | Dioctadecylamin (26,0 g = 0,05 Mol) | dto. |
| 8 | N-(2,2,6,6-Tetramethyl-4-piperidyl)-butylamin (10,6 g = 0,05 Mol) | dto. |
| 9 | N-(2,2,6,6-Tetramethyl-4-piperidyl)-octadecylamin (20,8 g = 0,05 Mol) | dto. |
| 10 | wie Beispiel 1 | N-(2,2,6,6-Tetramethyl-4-piperidyl)-1,6-diaminohexen (12,8 g = 0,05 Mol) |
| 11 | wie Beispiel 2 | dto. |
| 12 | wie Beispiel 3 | dto. |
| 13 | N-(2,2,6,6-Tetramethyl-4-piperidyl)-3-diethylaminopropylamin (13,5 g = 0,05 Mol) | dto. |
| 14 | Butylamin (3,65 g = 0,05 Mol) | dto. |
| 15 | Octadecylamin (13,5 g = 0,05 Mol) | dto. |
| 16 | Dicyclohexylamin (9,1 g = 0,05 Mol) | dto. |

Fortsetzung

| Beispiel | Monofunktionelles Edukt (Menge) | Bifunktionelles Edukt (Menge) |
|---|---|---|
| 17 | kein monofunktionelles Edukt | wie Beispiel 10 (25,5 g = 0,1 Mol) |
| 18 | wie Beispiel 1 | N-(2,2,6,6-Tetramethyl-4-piperidyl)-bis-1,3-aminomethylcyclohexan (14,1 g = 0,05 Mol) |
| 19 | wie Beispiel 3 | dto. |
| 20 | Dibutylamin (6,5 g = 0,05 Mol) | dto. |
| 21 | kein monofunktionelles Edukt | wie Beispiel 18 (28,2 g = 0,1 Mol) |
| 22 | wie Beispiel 1 | Gemisch aus<br>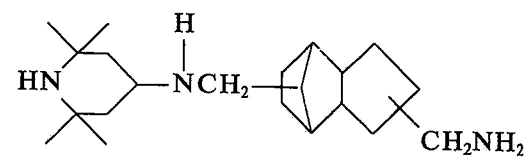<br>und<br>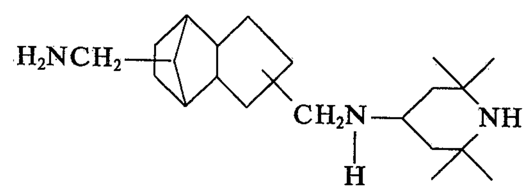<br>(16,6 g = 0,05 Mol) |
| 23 | wie Beispiel 2 | dto. |
| 24 | wie Beispiel 3 | dto. |
| 25 | kein monofunktionelles Edukt | wie Beispiel 22 (33,1 g = 0,1 Mol) |

Fortsetzung

| Beispiel | Monofunktionelles Edukt (Menge) | Bifunktionelles Edukt (Menge) |
|---|---|---|
| 26 | wie Beispiel 1 | N-(2,2,6,6-Tetramethyl-4-piperidyl)-N'-isopropyl-1,6-diaminohexan (14,9 g = 0,05 Mol) |
| 27 | Hexylamin (5,1 g = 0,05 Mol) | dto. |
| 28 | kein monofunktionelles Edukt | wie Beispiel 26 (29,7 g = 0,1 Mol) |
| 29 | wie Beispiel 1 | N-(2,2,6,6-Tetramethyl-4-piperidyl)-N'-cyclododecyl-1,6-diaminohexan (21,1 g = 0,05 Mol) |
| 30 | kein monofunktionelles Edukt | wie Beispiel 29 (42,1 g = 0,1 Mol) |

## Beispiel 31

N,N',N"-Tris-{2,4-bis-[N-(2,2,6,6-tetramethyl-4-piperidyl)-3-methoxipropylamino]-1,3,5-triazin-6-yl}-N-(2,2,6,6-tetramethyl-4-piperidyl)-dipropylentriamin

In 200 ml Xylol trägt man 34,0 g (6/100 Mol) 6-Chlor-2,4-bis-[N-(2,2,6,6-tetramethyl-4-piperidyl)-3-methoxipropylamino]-1,3,5-triazin, 5,4 g (2/100 Mol) N-(2,2,6,6-Tetramethyl-4-piperidyl)-dipropylentriamin und 2,4 g (6/100 Mol) NaOH-Pulver ein und rührt das resultierende Gemisch 20 Stunden unter Rückflußtemperatur. Anschließend wird heiß filtriert, das Filtrat im Vakuum eingedampft und der Rückstand nach dem Behandeln mit warmem Wasser zuletzt im Hochvakuum getrocknet. Farbloses Harz, Ausbeute 36,9 g, Schmelzpunkt 83°C.

## Beispiel 32

Dieses Beispiel zeigt die Flüchtigkeit der neuen Triazinstabilisatoren im Vergleich zu einem Produkt des Standes der Technik.

Die Flüchtigkeiten wurden in einer Apparatur zur thermogravimetrischen Analyse bestimmt. Gleiche Mengen (500 mg) der erfindungsgemäßen Verbindungen und der Vergleichssubstanz wurden dazu in Stickstoffatmosphäre mit einer Aufheizgeschwindigkeit von 2 K/Min. bis auf 300°C erhitzt und der Substanzverlust in $mg/cm^2$ Probenoberfläche gemessen. Die Ergebnisse zeigt nachstehende Tabelle:

| Stabilisator nach Beispiel | Gewichtsverlust in $mg/cm^2$ beim Erreichen von ... °C | | | |
|---|---|---|---|---|
| | 220 | 260 | 300 | 10 Min. bei 300 |
| 1 | 0,16 | 1,58 | 3,0 | 6,16 |
| 10 | 0,32 | 1,95 | 4,74 | 7,90 |
| 17 | 0,16 | 1,63 | 3,79 | 7,11 |
| 22 (Vergleich)*) | 0,47 | 3,48 | 10,59 | 17,38 |

*) Substanz nach Beispiel 6 der DE-OS 26 36 144 (Umsetzungsprodukt aus Cyanurchlorid und N,N'-(2,2,6,6-Tetramethyl-4-piperidyl)-hexamethylendiamin).

## Beispiel 33

Dieses Beispiel soll die lichtstabilisierende Wirkung der neuen Verbindungen in einem Poly-$\alpha$-Olefin aufzeigen.

100 Gewichtsteile Polypropylen mit einem Schmelzindex $i_5$ von ca. 6 g/10 Min. (bestimmt nach ASTM D 1238-62 T) und einer Dichte von 0,96 wurden mit

0,1 Gew.-Tln. Pentaerythrityl-tetrakis-3-(3,5-di-tert.-butyl-4-hydroxiphenyl)-propionat,
0,2 Gew.-Tln. Calciumstearat und
0,1 Gew.-Tln. des zu prüfenden Stabilisators

vermischt.

Um eine möglichst gleichmäßige Verteilung auf dem Polymerkorn zu erreichen, wurden die Stabilisatoren in einem Lösemittel gelöst, und die Lösung wurde unter Rühren in das Polypropylenpulver eingetropft, wobei durch gleichzeitige Bestrahlung mit einer IR-Lampe der größte Teil des Lösemittels wieder abdampfte.

Nach ca. 20 Min. wurde das Calciumstearat hinzugegeben und noch weitere 10 Min. gemischt. Lösemittelreste wurden durch Trocknen bei 50°C/120 Min. im Trockenschrank entfernt.

Die Mischung wurde auf einer Windsor-Spritzgußmaschine der Type SP 50 bei 240°C zu 60 × 60 × 1 mm-Platten verspritzt. Aus diesen Platten wurden Prüfkörper nach DIN 53 455, Form 3, verkleinert im Maßstab 1 : 3, ausgestanzt. Die als Vergleichsmuster benötigten Prüfkörper wurden analog, jedoch unter Fortlassen des zu testenden Stabilisators bzw. unter Zusatz der Vergleichsstabilisatoren, hergestellt.

Zur Bestimmung der Lichtstabilität wurden die Proben in einer Xenotest-1200-Apparatur der Firma Original Hanau Quarzlampen GmbH der Bestrahlung mit Wechsellicht unterworfen. Die Strahlungsin-

tensität wurde durch UV-Filter (Spezialfilterglas d = 1,7 mm) moduliert. Die Lichtbeständigkeit wurde nach DIN 53 387 (17 Min. trocknen, 3 Min. beregnen, Schwarztafeltemperatur 45°C, rel. Luftfeuchtigkeit während der Trockenperiode 70 bis 75%) geprüft. Gemessen wurde die Reißdehnung auf einer Zugprüfmaschine der Firma Instron bei einer Abzugsgeschwindigkeit von 5 cm/Min. nach einer bestimmten Belichtungszeit in Stunden.

| Stabilisator nach Beispiel | Belichtungszeit in Stunden | Ermittelte Reißdehnung in % vom Ausgangswert |
|---|---|---|
| 10 | 1400 | >50 |
| 22 | 1400 | >50 |
| Polypropylen | 260 | 1 |
| Vergleich[1]) | 320 | 1 |
| Vergleich[2]) | 1400 | 50 |

[1]) Ohne Lichtstabilisator.
[2]) Verbindung nach Beispiel 6 der DE-OS 26 36 144.

Beispiel 34

Zu Polypropylen (® Hostalen PPU VP 1770 F der Hoechst AG) vom Schmelzindex $MFI_{190}$ : 51,9 g/10 Min. (DIN 53 535) werden 0,1 bis 0,25 Gew.-Teile der bei Beispiel 33 verwendeten Stabilisatoren über einen Laborschnellmischer eingemischt. Das so stabilisierte Material wurde in einem Laborextruder unter den üblichen Verarbeitungsbedingungen aufgeschmolzen und über eine Spinnpumpe mit Mehrfachspinnkopf zu Monofilamenten (87 dtex) verarbeitet, welche anschließend im Verhältnis 1 : 2,5 nachverstreckt wurden. Je 24 dieser Filamente wurden zu Garn texturiert und diese zu Prüfgeweben verarbeitet. Die Prüflinge wurden in einem Fadeometer der Lichtechtheitsprüfung unterzogen und nach der angegebenen Belichtungszeit dem Fingernageltest (leichtes Darüberreiben über das Gewebe mit dem Daumennagel) unterzogen. Nach 150 Stunden Belichtungszeit zeigten die mit den erfindungsgemäßen Verbindungen stabilisierten Prüfgewebe noch keine Schädigung.

**Patentansprüche für die Vertragsstaaten: BE, CH, DE, FR, GB, IT, LI, NL, SE**

1. Polytriazinylamine der allgemeinen Formel (I)

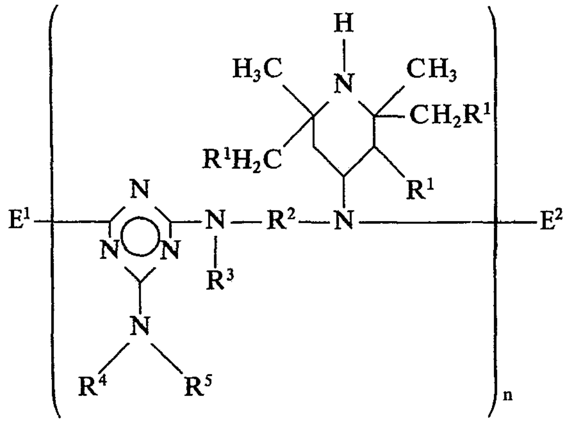

(I)

worin

n eine ganze Zahl von 1 bis 200 und bei n > 1 die Polymerkette »ataktisch« aufgebaut ist,
$R^1$ Wasserstoff, oder $C_1$- bis $C_5$-Alkyl bedeutet,
$R^2$ für $C_2$- bis $C_{18}$-Alkylen oder für $C_2$- bis $C_{12}$-Bis-(propyloxi)-alkylen oder für $C_6$- bis $C_{18}$-Mono-, Di-, oder Tricycloalkylen, in welchem bei dem erstgenannten zwei C-Atome durch

N-Atome, welche Propylengruppen tragen können, ersetzt sein können, oder für $C_6$- bis $C_{18}$-Arylen oder für $C_7$- bis $C_{18}$- Aralkylen steht oder auch wenn n = 1 ist, $R^2$ für eine Gruppe der Formel (II)

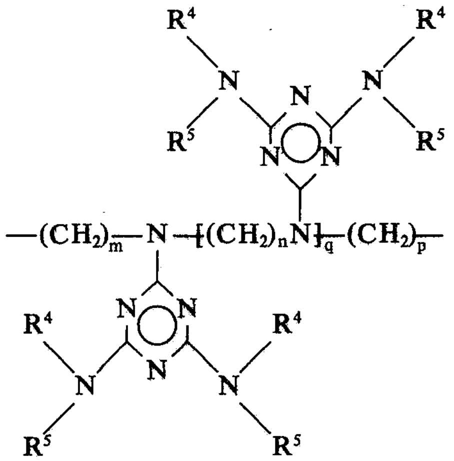

(II)

in welcher m, n und p ganze Zahlen von 2 bis 6 sind, q eine ganze Zahl von 0 bis 3 ist, sowie $R^4$ und $R^5$ die weiter unten angegebenen Bedeutungen haben, stehen kann,

$R^3$ Wasserstoff oder $C_1$- bis $C_{18}$-Alkyl oder $C_5$- bis $C_{12}$-Cycloalkyl oder $C_7$- bis $C_{14}$-Aralkyl bedeutet,

$R^4$ und $R^5$ gleich oder verschieden sind und für Wasserstoff, $C_1$- bis $C_{18}$-Alkyl, $C_5$- bis $C_{12}$-Cycloalkyl, $C_7$- bis $C_{14}$-Aralkyl oder eine Gruppe der Formel (III)

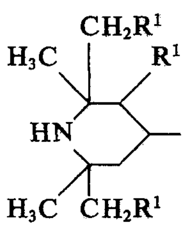

(III)

in welcher $R^1$ die oben angegebene Bedeutung hat, stehen oder

$R^4$ eine der vorstehend genannten Gruppen ist und

$R^5$ die Bedeutung von $C_1$- bis $C_{18}$-Alkoxipropyl oder $C_2$- bis $C_4$-Hydroxialkyl oder $C_2$- bis $C_5$-Dimethyl- oder -Diethylaminoalkyl hat oder bei n > 1 für eine Gruppe der Formel $-R^2NHPip$ im Falle von $R^4 = R^3$, oder für eine Gruppe der Formel $-R^2NHR^3$ im Falle von $R^4$ = Pip steht, wobei $R^2$, $R^3$ und $R^4$ die oben angegebenen Bedeutungen haben und Pip eine Gruppe der Formel (III) ist,

$E^1$ ein Halogenatom oder die Gruppe

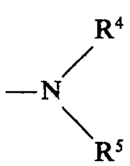

und

$E^2$ Wasserstoff oder ein Triazinring der Formel (IV)

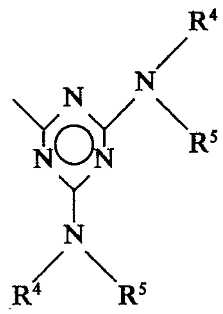

(IV)

in welchem $R^4$ und $R^5$ die oben angegebenen Bedeutungen haben,

sein soll.

2. Verfahren zur Herstellung der Verbindungen nach Anspruch 1, dadurch gekennzeichnet, daß man in einem inerten, organischen Lösungsmittel entweder

A) ein Monohalogentriazin der Formel (V a)

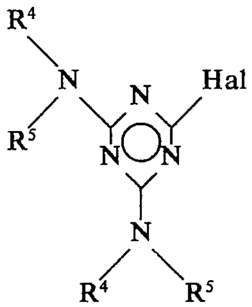

(Va)

oder ein Dihalogentriazin der Formel (V b)

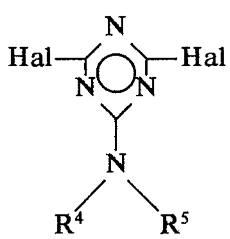

(Vb)

mit der 0,8- bis 1,4fach molaren Menge eines Polyamins der Formel (VI)

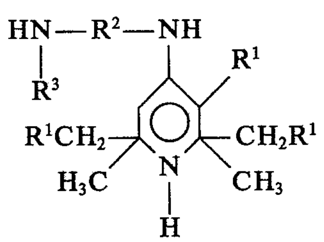

(VI)

wobei in diesen Formeln Hal Halogen ist und $R^1$, $R^2$, $R^3$, $R^4$ und $R^5$ die in Anspruch 1 angegebenen Bedeutungen haben, in Gegenwart der — bezogen auf Verbindung (VI) — äquivalenten Menge einer als Halogenwasserstoffakzeptor dienenden anorganischen Base bei 50 bis 200°C umsetzt, oder

B) ein Polytriazin der Formel (VIII)

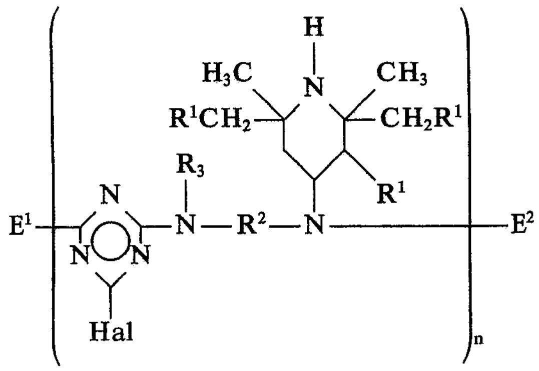

(VIII)

mit der 0,8- bis 1,4fach valenten Menge eines Amins der Formel (VII)

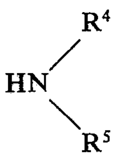

(VII)

wobei in diesen Formeln Hal Halogen ist und $R^1$, $R^2$, $R^3$, $R^4$, $R^5$, $E^1$ und $E^2$ die in Anspruch 1 angegebenen Bedeutungen haben, in Gegenwart der – bezogen auf Verbindung (VII) – äquivalenten Menge einer anorganischen Base bei 50 bis 200°C zur Reaktion bringt, oder

C) zunächst bei 10 bis 60°C in Gegenwart eines Halogenwasserstoffakzeptors aus Cyanurhalogenid und der 0,8- bis 1,4fach molaren Menge eines Diamins der Formel (VI) oder der 1,2- bis 2,1fach molaren Menge einer Aminoverbindung der Formel (VII) die Verbindung (VIII) bzw. (V a) oder bei 0 bis 50°C aus Cyanurhalogenid und der 0,8- bis 1,3fach molaren Menge einer Aminoverbindung der Formel (VII) die Verbindung (V b) synthetisiert, worauf diese jeweiligen Zwischenverbindungen (VIII) bzw. (V a) und (V b) ohne sie zu isolieren unter Zugabe einer weiteren Menge Halogenwasserstoffakzeptor bei 50 bis 200°C entsprechend B mit einer Verbindung der Formel (VII) bzw. entsprechend A mit einer Verbindung der Formel (VI) umgesetzt werden.

3. Verwendung der Verbindungen nach Anspruch 1 zum Stabilisieren von synthetischen Polymeren.

4. Verwendung nach Anspruch 3, dadurch gekennzeichnet, daß das Polymere ein Polyolefin ist.

5. Verwendung nach Anspruch 3, dadurch gekennzeichnet, daß das Polymere ein Polyacrylat oder Polymethacrylat ist.

6. Verwendung nach Anspruch 3, dadurch gekennzeichnet, daß das Polymere ein Homo- oder Copolymerisat des Styrols ist.

7. Verfahren zum Stabilisieren von synthetischen Polymeren gegen den schädigenden Einfluß von Licht, dadurch gekennzeichnet, daß man den Polymeren, gegebenenfalls neben bisher bekannten, stabilisierend wirkenden Stoffen, 0,01 bis 5 Gew.-Teile, bezogen auf Polymeres, eines Stabilisators nach Anspruch 1 zusetzt.

8. Gegen UV-Zersetzung stabilisierte, synthetische Polymere, in denen 0,01 bis 5 Gew.-Teile, bezogen auf Polymeres, eines Stabilisators nach Anspruch 1 enthalten sind.

**Patentansprüche für den Vertragsstaat: AT**

1. Verfahren zur Herstellung von Polytriazinylaminen der allgemeinen Formel (I)

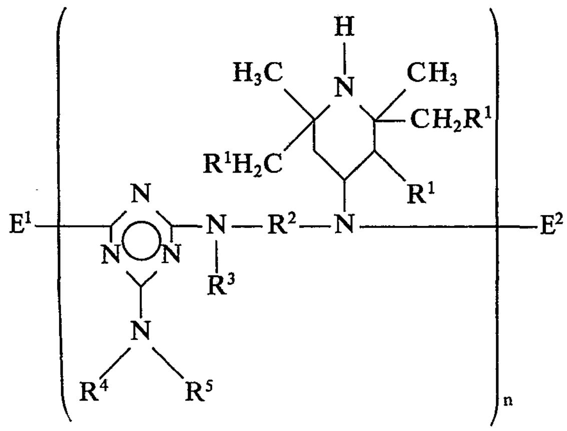

(I)

worin

n eine ganze Zahl von 1 bis 200 und bei n > 1 die Polymerkette »ataktisch« aufgebaut ist,
$R^1$ Wasserstoff oder $C_1$- bis $C_5$-Alkyl bedeutet,
$R^2$ für $C_2$- bis $C_{18}$-Alkylen oder für $C_2$- bis $C_{12}$-Bis-(propyloxi)-alkylen oder für $C_6$- bis $C_{18}$-Mono-, Di- oder Tricycloalkylen, in welchem bei dem erstgenannten zwei C-Atome durch N-Atome, welche Propylengruppen tragen können, ersetzt sein können, oder für $C_6$- bis $C_{18}$-Arylen oder für $C_7$- bis $C_{18}$- Aralkylen steht oder auch wenn n = 1 ist, $R^2$ für eine Gruppe der Formel (II)

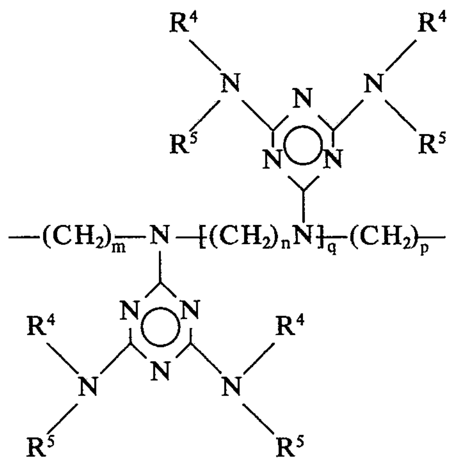

(II)

in welcher m, n und p ganze Zahlen von 2 bis 6 sind, q eine ganze Zahl von 0 bis 3 ist, sowie $R^4$ und $R^5$ die weiter unten angegebenen Bedeutungen haben, stehen kann,
$R^3$ Wasserstoff oder $C_1$- bis $C_{18}$-Alkyl oder $C_5$- bis $C_{12}$-Cycloalkyl oder $C_7$- bis $C_{14}$-Aralkyl bedeutet,
$R^4$ und $R^5$ gleich oder verschieden sind und für Wasserstoff, $C_1$- bis $C_{18}$-Alkyl, $C_5$- bis $C_{12}$-Cycloalkyl, $C_7$- bis $C_{14}$-Aralkyl oder eine Gruppe der Formel (III)

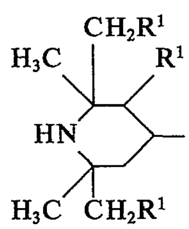

(III)

in welcher $R^1$ die oben angegebene Bedeutung hat, stehen oder
$R^4$ eine der vorstehend genannten Gruppen ist und
$R^5$ die Bedeutung von $C_1$- bis $C_{18}$-Alkoxipropyl oder $C_2$- bis $C_4$-Hydroxialkyl oder $C_2$- bis

$C_5$-Dimethyl- oder -Diethylaminoalkyl hat oder bei $n > 1$ für eine Gruppe der Formel $-R^2NHPip$ im Falle von $R^4 = R^3$, oder für eine Gruppe der Formel $-R^2NHR^3$ im Falle von $R^4 = Pip$ steht, wobei $R^2$, $R^3$ und $R^4$ die oben angegebenen Bedeutungen haben und Pip eine Gruppe der Formel (III) ist,

$E^1$ ein Halogenatom oder die Gruppe

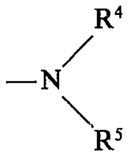

und

$E^2$ Wasserstoff oder ein Triazinring der Formel (IV)

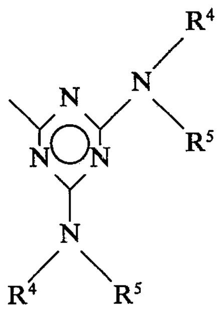

(IV)

in welchem $R^4$ und $R^5$ die oben angegebenen Bedeutungen haben,

dadurch gekennzeichnet, daß man in einem inerten, organischen Lösungsmittel entweder

A) ein Monohalogentriazin der Formel (V a)

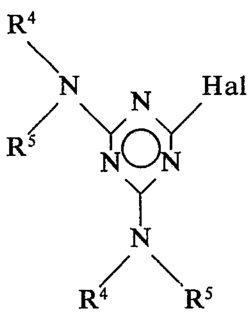

(V a)

oder ein Dihalogentriazin der Formel (V b)

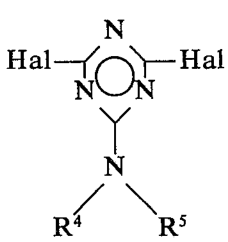

(Vb)

mit der 0,8- bis 1,4fach molaren Menge eines Polyamins der Formel (VI)

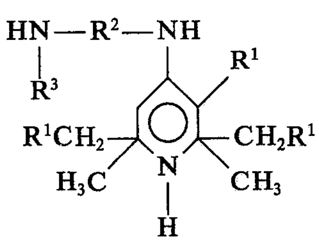

(VI)

wobei in diesen Formeln Hal Halogen ist und $R^1$, $R^2$, $R^3$, $R^4$ und $R^5$ die oben angegebenen Bedeutungen haben, in Gegenwart der — bezogen auf Verbindung (VI) — äquivalenten Menge einer als Halogenwasserstoffakzeptor dienenden anorganischen Base bei 50 bis 200°C umsetzt, oder

B) ein Polytriazin der Formel (VIII)

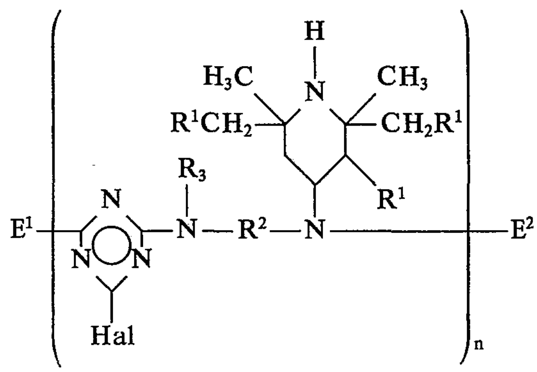

(VIII)

mit der 0,8- bis 1,4fach valenten Menge eines Amins der Formel (VII)

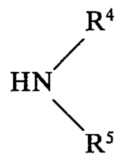

(VII)

wobei in diesen Formeln Hal, $R^1$, $R^2$, $R^3$, $R^4$, $R^5$, $E^1$ und $E^2$ die in Anspruch 1 angegebenen Bedeutungen haben, in Gegenwart der — bezogen auf Verbindung (VII) — äquivalenten Menge einer anorganischen Base bei 50 bis 200°C zur Reaktion bringt, oder

C) zunächst bei 10 bis 60°C in Gegenwart eines Halogenwasserstoffakzeptors aus Cyanurhalogenid und der 0,8- bis 1,4fach molaren Menge eines Diamins der Formel (VI) oder der 1,2- bis 2,1fach molaren Menge einer Aminoverbindung der Formel (VII) die Verbindung (VIII) bzw. (V a) oder bei 0 bis 50°C aus Cyanurhalogenid und der 0,8- bis 1,3fach molaren Menge einer Aminoverbindung der Formel (VII) die Verbindung (V b) synthetisiert, worauf diese jeweiligen Zwischenverbindungen (VIII) bzw. (V a) und (V b) ohne sie zu isolieren unter Zugabe einer weiteren Menge Halogenwasserstoffakzeptor bei 50 bis 200°C entsprechend B mit einer Verbindung der Formel (VII) bzw. entsprechend A mit einer Verbindung der Formel (VI) umgesetzt werden.

2. Verwendung der nach Anspruch 1 hergestellten Verbindungen zum Stabilisieren von synthetischen Polymeren.

3. Verwendung nach Anspruch 2, dadurch gekennzeichnet, daß das Polymere ein Polyolefin ist.

4. Verwendung nach Anspruch 2, dadurch gekennzeichnet, daß das Polymere ein Polyacrylat oder Polymethacrylat ist.

5. Verwendung nach Anspruch 2, dadurch gekennzeichnet, daß das Polymere ein Homo- oder Copolymerisat des Styrols ist.

6. Verfahren zum Stabilisieren von synthetischen Polymeren gegen den schädigenden Einfluß von Licht, dadurch gekennzeichnet, daß man den Polymeren, gegebenenfalls neben bisher bekannten, stabilisierend wirkenden Stoffen, 0,01 bis 5 Gew.-Teile, bezogen auf Polymeres, eines nach Anspruch 1 hergestellten Stabilisators zusetzt.

7. Gegen UV-Zersetzung stabilisierte, synthetische Polymere, in denen 0,01 bis 5 Gew.-Teile, bezogen auf Polymeres, eines nach Anspruch 1 hergestellten Stabilisators enthalten sind.

**Claims for the Contracting states: BE, CH, LI, DE, FR, GB, IT, NL, SE**

1. Polytriazinylamines of the general formula (I)

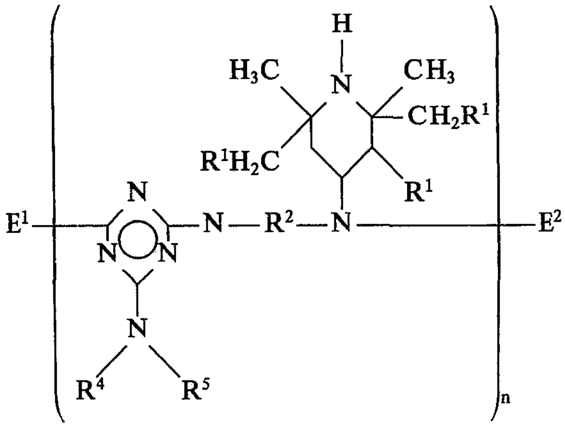

(I)

in which n is an integer from 1 to 200, the polymer chain having an »atactic« structure when n > 1, $R^1$ denotes hydrogen or $C_1$- to $C_5$-alkyl, $R^2$ represents $C_2$- to $C_{18}$-alkylene or $C_2$- to $C_{12}$-bis-(propoxy)-alkylene or $C_6$- to $C_{18}$-mono-, di- or tri-cycloalkylene, in which, in the first case, two C atoms can be replaced by N atoms which can carry propylene groups, or represents $C_6$- to $C_{18}$-arylene or $C_7$- to $C_{18}$-aralkylene, or also, if n = 1, $R^2$ can represent a group of the formula (II)

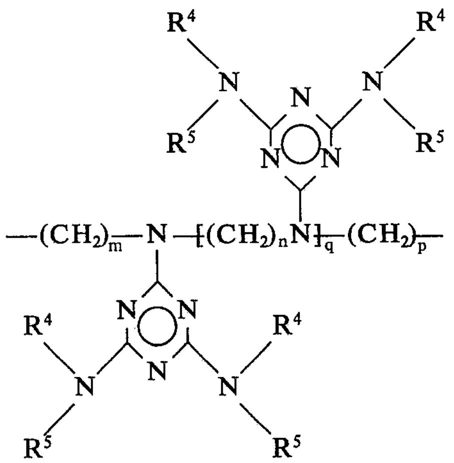

(II)

in which m, n and p are integers from 2 to 6, q is an integer from 0 to 3 and $R^4$ and $R^5$ have the meanings given below, $R^3$ denotes hydrogen or $C_1$- to $C_{18}$-alkyl or $C_5$- to $C_{12}$-cycloalkyl or $C_7$- to $C_{14}$-aralkyl, $R_4$ and $R_5$ are identical or different and represent hydrogen, $C_1$- to $C_{18}$-alkyl, $C_5$- to $C_{12}$-cycloalkyl, $C_7$- to $C_{14}$-aralkyl or a group of the formula (III)

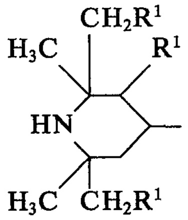

(III)

in which $R^1$ has the meaning given above, or $R^4$ is one of the abovementioned groups and $R^5$ has the meaning of $C_1$- to $C_{18}$-alkoxypropyl or $C_2$- to $C_4$-hydroxyalkyl or $C_2$- to $C_5$-dimethylaminoalkyl or -diethylaminoalkyl, or, when n > 1, represents a group of the formula $-R^2NHPip$ in the case where $R^4 = R^3$, or a group of the formula $-R^2NHR^3$ in the case where $R^4$ = Pip, $R^2$, $R^3$ and $R^4$ having the meanings given above and Pip being a group of the formula (III), $E^1$ is intended to be a halogen atom or the group

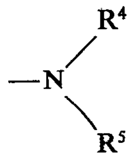

and $E^2$ is intended to be hydrogen or a triazine ring of the formula (IV)

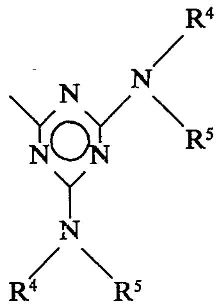

(IV)

in which $R^4$ and $R^5$ have the meanings given above.

2. A process for the preparation of the compounds as claimed in claim 1, which comprises either reacting

A) a monohalogenotriazine of the formula (Va)

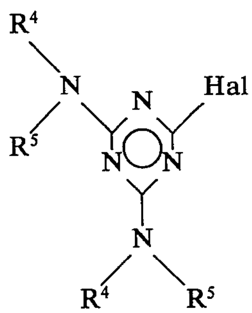

(Va)

or a dihalogenotriazine of the formula (Vb)

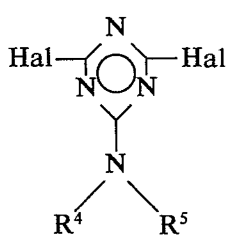

(Vb)

in an inert organic solvent, with the 0.8- to 1.4-fold molar amount of a polyamine of the formula (VI)

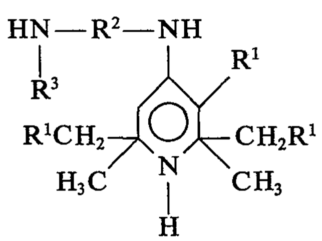

(VI)

$R^1$, $R^2$, $R^3$, $R^4$ and $R^5$ in these formulae having the meanings given in claim 1 and Hal is halogen, in the presence of the equivalent amount — relative to the compound (VI) — of an inorganic base used as a hydrogen halide acceptor, at 50 to 200°C, or reacting

B) a polytriazine of the formula (VIII)

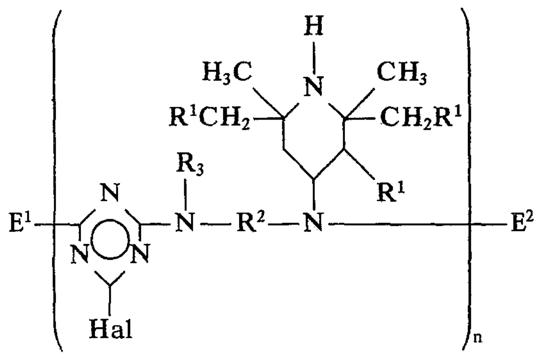

(VIII)

in an inert organic solvent, with the 0.8- to 1.4-fold equivalent amount of an amine of the formula (VII)

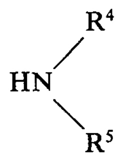

(VII)

$R^1$, $R^2$, $R^3$, $R^4$, $R^5$, $E^1$ and $E^2$ in these formulae having the meanings given in claim 1 and Hal is halogen, in the presence of the equivalent amount — relative to the compound (VII) — of an inorganic base, at 50 to 200°C, or

C) first synthesizing the compound (VIII) or (V a), at 10 to 60°C, in the presence of a hydrogen halide acceptor, from cyanuric halide and the 0.8- to 1.4-fold molar amount of a diamine of the formula (VI) or the 1.2- to 2.1-fold molar amount of an amino compound of the formula (VII), or synthesizing the compound (V b), at 0 to 50°C, from cyanuric halide and the 0.8- to 1.3-fold molar amount of an amino compound of the formula (VII), and then reacting these respective intermediates (VIII) or (V a) and (V b), without isolating them, with a compound of the formula (VII), corresponding to B, or with a compound of the formula (VI), corresponding to A, with the addition of a further amount of hydrogen halide acceptor, at 50 to 200°C.

3. Use of the compounds as claimed in claim 1 for stabilizing synthetic polymers.
4. Use as claimed in claim 3, wherein the polymer is a polyolefin.
5. Use as claimed in claim 3, wherein the polymer is a polyacrylate or polymethacrylate.
6. Use as claimed in claim 3, wherein the polymer is a homopolymer or copolymer of styrene.
7. A process for stabilizing synthetic polymers against the damaging effect of light, which comprises adding, to the polymers, 0.01 to 5 parts by weight, relative to the polymer, of a stabilizer as claimed in claim 1, optionally in addition to substances known hitherto which have a stabilizing action.
8. Synthetic polymers stabilized against decomposition by UV, which contain 0.01 to 5 parts by weight, relative to the polymer, of a stabilizer as claimed in claim 1.

**Claims for the Contracting state: AT**

1. A process for the preparation of polytriazinylamines of the general formula (I)

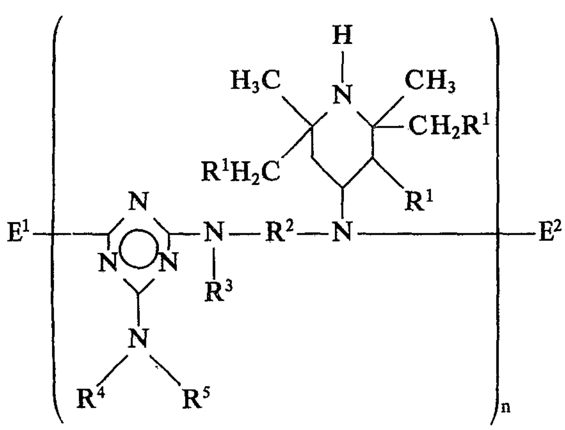

(I)

in which n is an integer from 1 to 200, the polymer chain having an »atactic« structure when $n > 1$, $R^1$ denotes hydrogen or $C_1$- to $C_5$-alkyl, $R^2$ represents $C_2$- to $C_{18}$-alkylene or $C_2$- to $C_{12}$-bis-(propoxy)-alkylene or $C_6$- to $C_{18}$-mono-, di- or tri-cycloalkylene, in which, in the first case, two C atoms can be replaced by N atoms which can carry propylene groups, or represents $C_6$- to $C_{18}$-arylene or $C_7$- to $C_{18}$-aralkylene, or also, if $n = 1$, $R^2$ can represent a group of the formula (II)

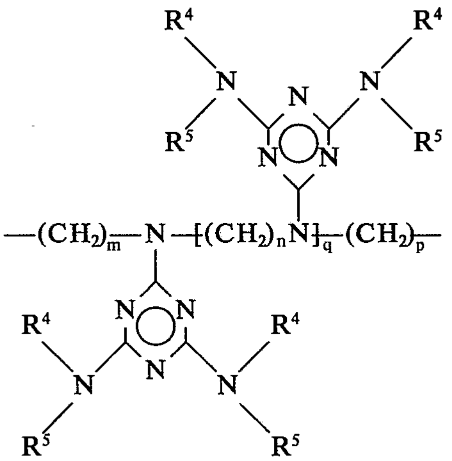

(II)

in which m, n and p are integers from 2 to 6, q is an integer from 0 to 3 and $R^4$ and $R^5$ have the meanings given below, $R^3$ denotes hydrogen or $C_1$- to $C_{18}$-alkyl or $C_5$- to $C_{12}$-cycloalkyl or $C_7$- to $C_{14}$-aralkyl, $R_4$ and $R_5$ are identical or different and represent hydrogen, $C_1$- to $C_{18}$-alkyl, $C_5$- to $C_{12}$-cycloalkyl, $C_7$- to $C_{14}$-aralkyl or a group of the formula (III)

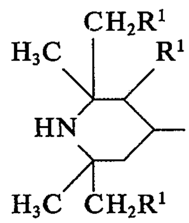

(III)

in which $R^1$ has the meaning given above, or $R^4$ is one of the abovementioned groups and $R^5$ has the meaning of $C_1$- to $C_{18}$-alkoxypropyl or $C_2$- to $C_4$-hydroxyalkyl or $C_2$- to $C_5$-dimethylaminoalkyl or -diethylaminoalkyl, or, when $n > 1$, represents a group of the formula $-R^2NHPip$ in the case where $R^4 = R^3$, or a group of the formula $-R^2NHR^3$ in the case where $R^4 = Pip$, $R^2$, $R^3$ and $R^4$ having the meanings given above and Pip being a group of the formula (III), $E^1$ is intended to be a halogen atom or the group

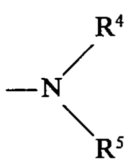

and $E^2$ is intended to be hydrogen or a triazine ring of the formula (IV)

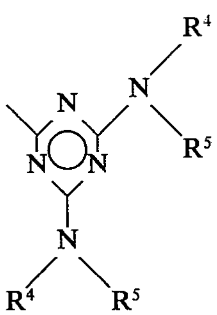

(IV)

in which $R^4$ and $R^5$ have the meanings given above, which comprises either reacting

A) a monohalogenotriazine of the formula (V a)

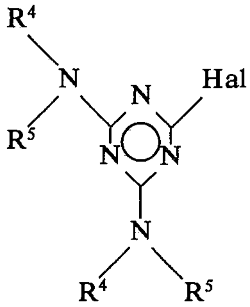

(Va)

or a dihalogenotriazine of the formula (V b)

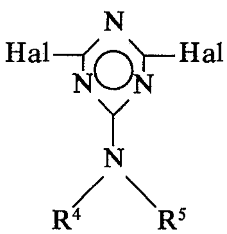

(Vb)

in an inert organic solvent, with the 0.8- to 1.4-fold molar amount of a polyamine of the formula (VI)

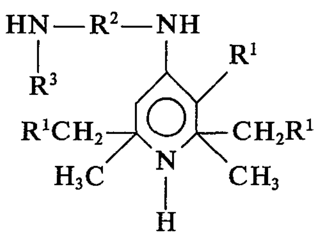

(VI)

$R^1$, $R^2$, $R^3$, $R^4$ and $R^5$ in these formulae having the meanings given above and Hal is halogen, in the presence of the equivalent amount — relative to the compound (VI) — of an inorganic base used as a hydrogen halide acceptor, at 50 to 200°C, or reacting

B) a polytriazine of the formula (VIII)

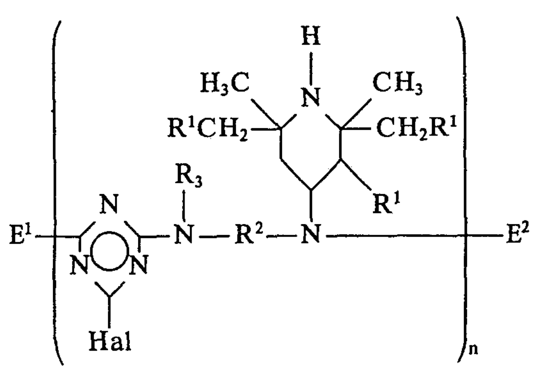

(VIII)

in an inert organic solvent, with the 0.8- to 1.4-fold equivalent amount of an amine of the formula (VII)

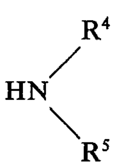

(VII)

$R^1$, $R^2$, $R^3$, $R^4$, $R^5$, $E^1$ and $E^2$ in these formulae having the meanings given above and Hal is halogen, in the presence of the equivalent amount – relative to the compound (VII) – of an inorganic base, at 50 to 200°C, or

C) first synthesizing the compound (VIII) or (V a), at 10 to 60°C, in the presence of a hydrogen halide acceptor, from cyanuric halide and the 0.8- to 1.4-fold molar amount of a diamine of the formula (VI) or the 1.2- to 2.1-fold molar amount of an amino compound of the formula (VII), or synthesizing the compound (V b), at 0 to 50°C, from cyanuric halide and the 0.8- to 1.3-fold molar amount of an amino compound of the formula (VII), and then reacting these respective intermediates (VIII) or (V a) and (V b), without isolating them, with a compound of the formula (VII), corresponding to B, or with a compound of the formula (VI), corresponding to A, with the addition of a further amount of hydrogen halide acceptor, at 50 to 200°C.

2. Use of the compounds as prepared according to claim 1 for stabilizing synthetic polymers.

3. Use as claimed in claim 2, wherein the polymer is a polyolefin.

4. Use as claimed in claim 2, wherein the polymer is a polyacrylate or polymethacrylate.

5. Use as claimed in claim 2, wherein the polymer is a homopolymer or copolymer of styrene.

6. A process for stabilizing synthetic polymers against the damaging effect of light, which comprises adding, to the polymers, 0.01 to 5 parts by weight, relative to the polymer, of a stabilizer as prepared according to claim 1, optionally in addition to substances known hitherto which have a stabilizing action.

7. Synthetic polymers stabilized against decomposition by UV, which contain 0.01 to 5 parts by weight, relative to the polymer, of a stabilizer as prepared according to claim 1.

**Revendications pour les Etats contractants: BE, CH, LI, DE, FR, GB, IT, NL, SE**

1. Poly-triazinylamines répondant à la formule générale I:

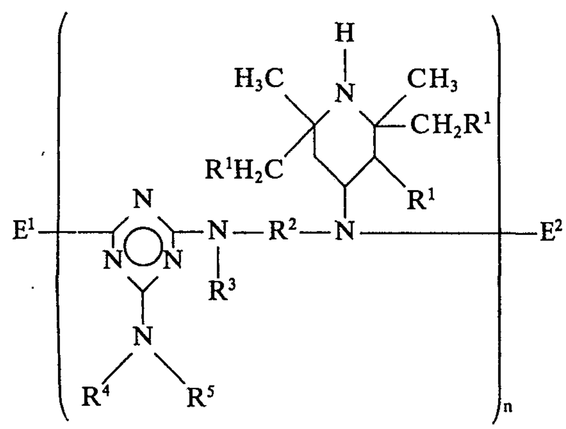

(I)

dans laquelle:

n représente un nombre entier de 1 à 200 et, dans le cas où n est supérieur à 1, la chaîne polymère a une structure »atactique«,

$R^1$ représente un atome d'hydrogène ou un radical alkyle contenant de 1 à 5 atomes de carbone,

$R^2$ peut être un alkylène en $C_2$—$C_{18}$, un bis-propoxy-alkylène en $C_2$—$C_{12}$, un mono-, di- ou tricycloalkylène en $C_6$—$C_{18}$, deux atomes de carbone, dans le monocycloalkylène cité, pouvant être remplacés par des atomes d'azote éventuellement porteurs de radicaux propylènes, un arylène en $C_6$—$C_{18}$ ou un aralkylène en $C_7$—$C_{18}$ ou un aralkylène en $C_7$—$C_{18}$, ou encore, lorsque n est égal à 1, $R^2$ peut représenter un radical répondant à la formule II:

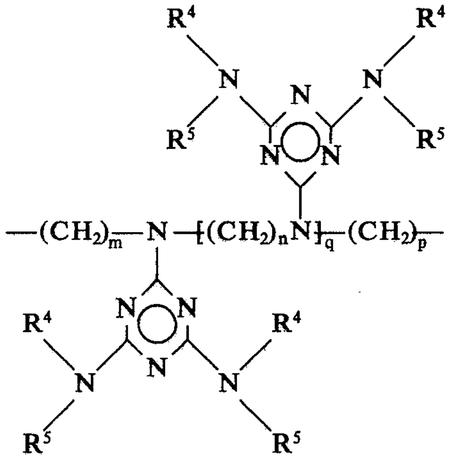

(II)

dans laquelle m, n et p représentent des nombres entiers de 2 à 6, q représente un nombre entier de 0 à 3, et $R^4$ et $R^5$ ont les significations qui sont données ci-dessous,

$R^3$ représente l'hydrogène, un alkyle en $C_1$—$C_{18}$, un cycloalkyle en $C_5$—$C_{12}$ ou un aralkyle en $C_7$—$C_{14}$,

$R^4$ et $R^5$ représentent chacun, indépendamment l'un de l'autre, l'hydrogène, un alkyle en $C_1$—$C_{18}$, un cycloalkyle en $C_5$—$C_{12}$, un aralkyle en $C_7$—$C_{14}$ ou un radical répondant à la formule III:

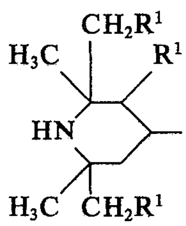

(III)

dans laquelle $R^1$ a la signification qui a été donnée ci-dessus, ou

$R^4$ représente l'un des radicaux qui ont été mentionnés ci-dessus, et

$R^5$ représente un alcoxypropyle dont l'alcoxy contient de 1 à 18 atomes de carbone, un hydroxyalkyle en $C_2$—$C_4$, un diméthylaminoalkyle ou diéthylaminoalkyle dont l'alkyle contient de 2 à 5 atomes de carbone, ou, lorsque n est supérieur à 1, un radical $-R^2NHPip$ dans le cas où $R^4$ est indentique à $R^3$, ou un radical $-R^2NHR^3$ dans le cas où $R^4$ représente Pip, les symboles $R^2$, $R^3$ et $R^4$ ayant les significations indiquées plus haut et Pip désignant un radical de formule III,

$E^1$ doit être un atome d'halogène ou un radical

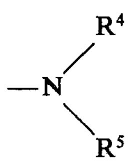

et

$E^2$ doit être l'hydrogène ou un radical triazinyle répondant à la formule IV:

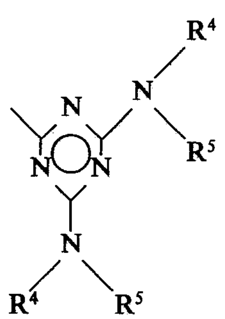

(IV)

dans laquelle $R^4$ et $R^5$ ont les significations qui ont été données plus haut.

2. Procédé de préparation des composés selon la revendication 1, procédé caractérisé en ce que, en opérant dans un solvant organique inerte, ou bien:

A) on fait réagir une monohalogénotriazine de formule Va:

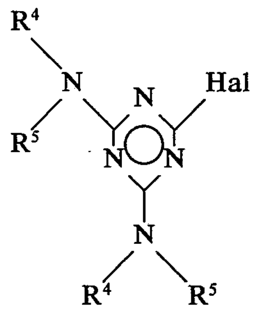

(Va)

ou une dihalogénotriazine de formule Vb:

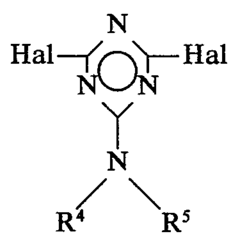

(Vb)

avec de 0,8 à 1,4 fois la quantité molaire d'une polyamine de formule VI:

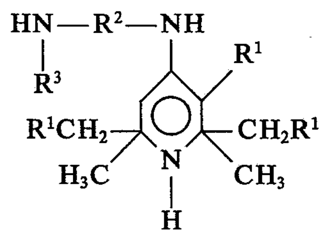

(VI)

formules dans lesquelles Hal représente un halogène tandis que $R^1$, $R^2$, $R^3$, $R^4$ et $R^5$ ont les significations qui ont été données à la revendication 1, en présence de la quantité équivalente — par rapport au composé (VI) — d'une base minérale servant d'accepteur d'hydrogène, à une temperature de 50 à 200°C, ou bien

B) on fait réagir une polytriazine de formule VIII:

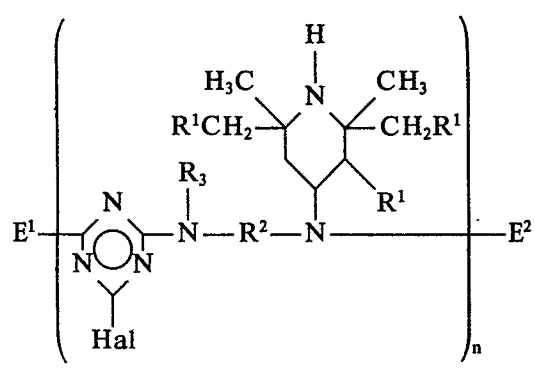

(VIII)

avec de 0,8 à 1,4 fois la quantité équivalente d'une amine de formule VII:

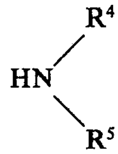

(VII)

formules dans lesquelles Hal représente un halogène tandis que $R^1$, $R^2$, $R^3$, $R^4$, $R^5$, $E^1$ et $E^2$ ont les significations qui ont été données à la revendication 1, en présence de la quantité équivalente — par rapport au composé (VII) — d'une base minérale, à une température de 50 à 200°C, ou bien

C) on prépare d'abord, à une température de 10 à 60°C, en présence d'un accepteur d'halogénure d'hydrogène, à partir d'un halogénure de cyanuryle et de 0,8 à 1,4 fois la quantité molaire d'une diamine de formule (VI) ou de 1,2 à 2,1 fois la quantité molaire d'un composé aminé de formule (VII), respectivement le composé (VIII) ou le composé (V a), ou, à une température de 0 à 50°C, à partir d'un halogénure de cyanuryle et de 0,8 à 1,3 fois la quantité molaire d'un composé aminé de formule (VII), le composé (V b), après quoi on fait réagir ces corps intermédiaires (VIII) ou (V a) et (V b), sans les isoler, en ajoutant une quantité supplémentaire d'accepteur d'halogénure d'hydrogène, à une température de 50 à 200°C, selon B avec un composé de formule VII ou selon A avec un composé de formule VI.

3. Application des composés selon la revendication 1 à la stabilisation de polymères synthétiques.

4. Application selon la revendication 3, caractérisée en ce que le polymère est une polyoléfine.

5. Application selon la revendication 3, caractérisée en ce que le polymère est un polyacrylate ou un polyméthacrylate.

6. Application selon la revendication 3, caractérisée en ce que le polymère est un homopolymère du styrène.

7. Procédé pour stabiliser des polymères synthétiques contre les effets destructeurs de la lumière, procédé caractérisé en ce qu'on ajoute aux polymères, éventuellement en plus de composés déjà connus en tant que stabilisants, de 0,01 à 5 parties en poids, par rapport au polymère, d'un stabilisant selon la revendication 1.

8. Polymères synthétiques stabilisés contre la destruction par les UV, polymères qui contiennent de 0,01 à 5 parties en poids, par rapport au polymère, d'un stabilisant selon la revendication 1.

**Revendications pour l'Etat contractant: AT**

1. Procédé de préparation de poly-triazinylamines répondant à la formule générale I:

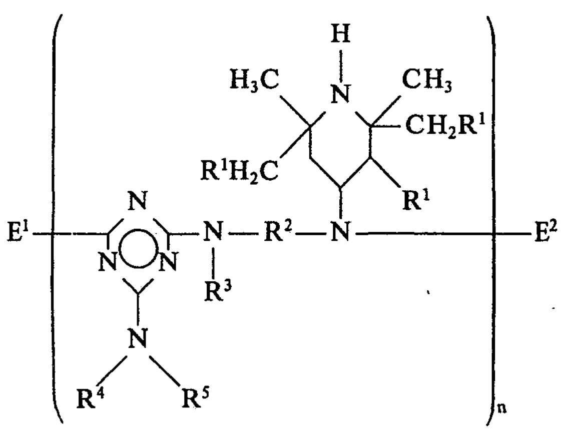

(I)

dans laquelle:

n représente un nombre entier de 1 à 200 et, dans le cas où n est supérieur à 1, la chaîne polymère a une structure »atactique«,

$R^1$ peut représenter un atome d'hydrogène ou un radical alkyle contenant de 1 à 5 atomes de carbone,

$R^2$ représente un alkylène en $C_2$—$C_{18}$, un bis-propoxy-alkylène en $C_2$—$C_{12}$, un mono-, di- ou tri-cycloalkylène en $C_6$—$C_{18}$, deux atomes de carbone, dans le monocycloalkylène cité, pouvant être remplacés par des atomes d'azote éventuellement porteurs de radicaux propylènes, un arylène en $C_6$—$C_{18}$ ou un aralkylène en $C_7$—$C_{18}$, ou encore, lorsque n est égal à 1, $R^2$ peut représenter un radical répondant à la formule II:

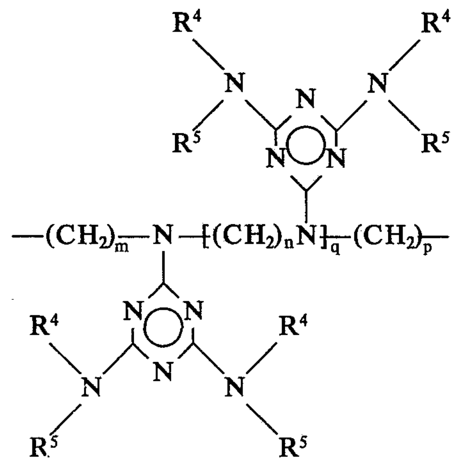

(II)

dans laquelle m, n et p représentent des nombres entiers de 2 à 6, q représente un nombre entier de 0 à 3, et $R^4$ et $R^5$ ont les significations qui sont données ci-dessous,

$R^3$ représente l'hydrogène, un alkyle en $C_1$—$C_{18}$, un cycloalkyle en $C_5$—$C_{12}$ ou un aralkyle en $C_7$—$C_{14}$,

$R^4$ et $R^5$ représentent chacun, indépendamment l'un de l'autre, l'hydrogène, un alkyle en $C_1$—$C_{18}$, un cycloalkyle en $C_5$—$C_{12}$, un aralkyle en $C_7$—$C_{14}$ ou un radical répondant à la formule III:

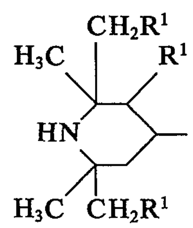

(III)

dans laquelle $R^1$ a la signification qui a été donnée ci-dessus, ou

$R^4$ représente l'un des radicaux qui ont été mentionnés ci-dessus, et

$R^5$ représente un alcoxypropyle dont l'alcoxy contient de 1 à 18 atomes de carbone, un hydroxyalkyle en $C_2$—$C_4$, un diméthylaminoalkyle ou diéthylaminoalkyle dont l'alkyle contient de 2 à 5 atomes de carbone, ou, lorsque n est supérieur à 1, un radical $-R^2NHPip$ dans le cas où $R^4$ est indentique à $R^3$, ou un radical $-R^2NHR^3$ dans le cas où $R^4$ représente Pip, les symboles $R^2$, $R^3$ et $R^4$ ayant les significations indiquées plus haut et Pip désignant un radical de formule III,

$E^1$ doit être un atome d'halogène ou un radical

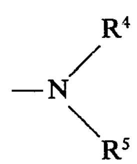

et

$E^2$ doit être l'hydrogène ou un radical triazinyle répondans à la formule IV:

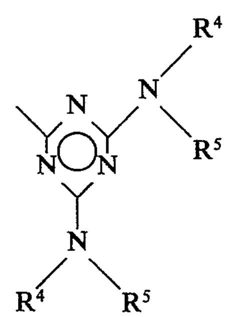

(IV)

dans laquelle $R^4$ et $R^5$ ont les significations qui ont été données plus haut,

procédé caractérisé en ce que, en opérant dans un solvant organique inerte, ou bien:

A) on fait réagir une monohalogénotriazine de formule V a:

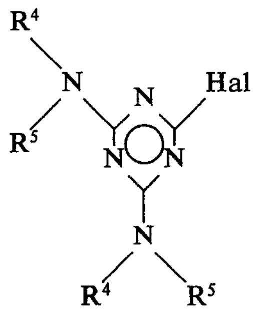

(Va)

ou une dihalogénotriazine de formule V b:

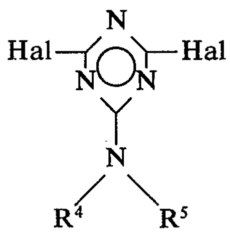

(Vb)

avec de 0,8 à 1,4 fois la quantité molaire d'une polyamine de formule VI:

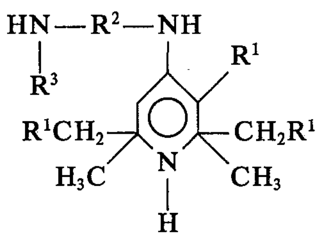

(VI)

formules dans lesquelles Hal représente un halogène tandis que $R^1$, $R^2$, $R^3$, $R^4$ et $R^5$ ont les significations qui ont été données ci-dessus, en présence de la quantité équivalente — par rapport au composé (VI) — d'une base minérale servant d'accepteur d'halogénure d'hydrogène, à une temperature de 50 à 200°C, ou bien

B) on fait réagir une polytriazine de formule VIII:

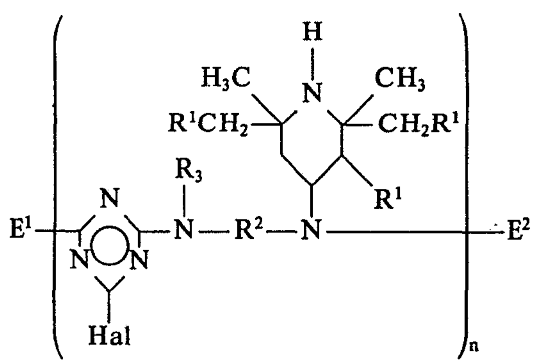

(VIII)

avec de 0,8 à 1,4 fois la quantité équivalente d'une amine de formule VII:

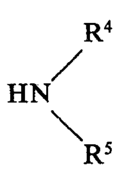

(VII)

formules dans lesquelles Hal représente un halogène tandis que $R^1$, $R^2$, $R^3$, $R^4$, $R^5$, $E^1$ et $E^2$ ont les significations qui ont été données ci-dessus, en présence de la quantité équivalente — par rapport au composé (VII) — d'une base minérale, à une température de 50 à 200°C, ou bien

C) on prépare d'abord, à une température de 10 à 60°C, en présence d'un accepteur d'halogénure d'hydrogène, à partir d'un halogénure de cyanuryle et de 0,8 à 1,4 fois la quantité molaire d'une diamine de formule (VI) ou de 1,2 à 2,1 fois la quantité molaire d'un composé aminé de formule (VII), respectivement le composé (VIII) ou le composé (V a), ou, à une température de 0 à 50°C, à partir d'un halogénure de cyanuryle et de 0,8 à 1,3 fois la quantité molaire d'un composé aminé de formule (VII), le composé (V b), après quoi on fait réagir ces corps intermédiaires (VIII) ou (V a) et (V b), sans les isoler, en ajoutant une quantité supplémentaire d'accepteur d'halogénure d'hydrogène, à une température de 50 à 200°C, selon B avec un composé de formule VII ou selon A avec un composé de formule VI.

2. Application des composés préparés selon la revendication 1 à la stabilisation de polymères synthétiques.

3. Application selon la revendication 2, caractérisée en ce que le polymère est une polyoléfine.

4. Application selon la revendication 2, caractérisée en ce que le polymère est un polyacrylate ou un polyméthacrylate.

5. Application selon la revendication 2, caractérisée en ce que le polymère est un homopolymère ou un copolymère du styrène.

6. Procédé pour stabiliser des polymères synthétiques contre l'action destructrice de la lumière, procédé caractérisé en ce qu'on ajoute aux polymères, éventuellement en plus de composés à action stabilisante qui étaient connus jusqu'à présent, de 0,01 à 5 parties en poids, par rapport au polymère, d'un stabilisant préparé selon la revendication 1.

7. Polymères synthétiques stabilisés contre la destruction par les UV, polymères qui contiennent de 0,01 à 5 parties en poids, par rapport au polymère, d'un stabilisant qui a été préparé selon la revendication 1.